# EUROPEAN PATENT SPECIFICATION

(11) **EP 3 561 952 B1**
(45) Date of publication and mention of the grant of the patent: **26.05.2021**
(21) Application number: 18207911.1
(22) Date of filing: 22.11.2018
(51) Int. Cl.: H01Q 1/32, H01Q 1/42

(54) **VEHICLE ANTENNA**
FAHRZEUGANTENNE
ANTENNE DE VÉHICULE

(30) Priority: 25.04.2018 KR 20180047932
(43) Date of publication of application: 30.10.2019
(73) Proprietor: Winnercom Co., Ltd., Hwaseong-si 18334 (KR)
(72) Inventor: KANG, GI Cho, 14070 Anyang-si (KR); JO, Hyun Seung, 14038 Anyang-si (KR); PARK, Tae Byung, 13922 Anyang-si (KR); JOUNG, Soon Bag, 47902 Busan (KR)
(74) Representative: Stolmár & Partner Patentanwälte PartG mbB

(56) References cited:
- WO-A1-2017/046971
- WO-A1-2017/178387
- DE-A1-102016 123 369
- US-A1- 2010 231 467

## Description

### TECHNICAL FIELD

The present invention relates to a vehicle antenna, and more particularly, to a vehicle antenna including an antenna case: having a dual structure formed by outer and inner cases, so that horizontal deformation of a central portion of the antenna case does not occur; having a bottom surface end part which forcibly presses a rubber waterproof member and having a firm hook fastening structure with a plastic base, so that even under a shock, separation from the plastic base is prevented and a watertight space can be maintained, and thus, water penetration into a substrate part, to which an antenna part and a circuit part are fixedly attached and which is accommodated in an inner space of the antenna case, can be prevented.

### BACKGROUND ART

Recently, due to rapid development of communication technology, necessity for providing a broadcasting service inside a vehicle over various frequency bands is being increased, and a vehicle antenna having a shark fin shape, to which a plurality of antennas can be simultaneously mounted, is being spotlighted. Accordingly, an antenna which is equipped therein with a plurality of antennas, such as radio broadcasting antennas, satellite DMB broadcast antennas, terrestrial DMB broadcast antennas, and GPS antennas, and which reflects various demands of consumers, are being developed.

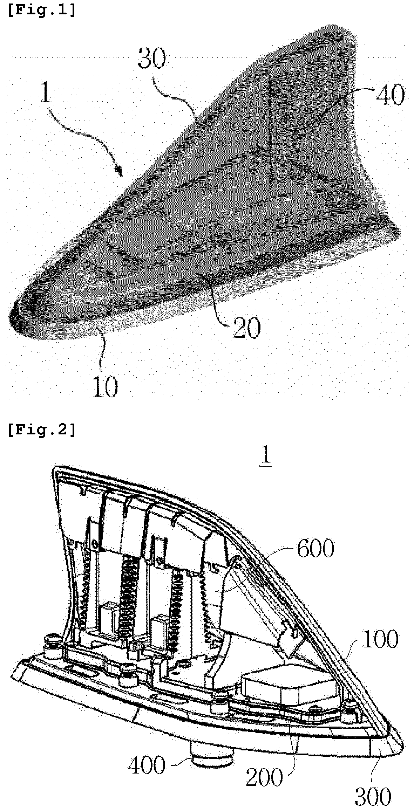

FIG. 1 is a perspective view of a vehicle antenna according to a related art. As shown in FIG. 1, a vehicle antenna 1 is provided with a rubber pad 10 which covers the outer peripheral surface of a base plate 20, and in an inner accommodation space of a shark fin shaped antenna cover 30 which covers the rubber pad 10, an antenna 40 is screw mounted and located on an upper surface of the base plate 20.

However, in the vehicle antenna 1 according to the related art, a shark fin-shaped antenna cover 30 is made of a single insulating plastic material and is simply coupled to the base plate 20 with a fastening structure, and a horizontal widening phenomenon occurs in the fastening structure. Thus, a phenomenon occurs in which even under a slight external shock, the cover 30, which is an antenna case, is easily separated from the insulating plastic base plate 20, and thus, there was a problem in that water, contaminating material, or the like penetrated into the antenna 40 and a circuit substrate located inside the inner accommodation space of the antenna cover 30, and a circuit malfunction and antenna characteristic degradation occurred simultaneously.

Thus, development of a practical and applicable technique for vehicle antennas is being strongly demanded such that a robust watertight space is maintained and thus various favorable characteristics of the antenna are ensured so that water or contaminating materials are prevented from penetrating into an antenna including a plurality of radiation elements and a circuit substrate part which are accommodated in an accommodation space inside an antenna cover

[Prior art document]

[Patent document]

(Patent document 0001) Korean Patent No. KR 10-1616018 (21 April, 2016), FIG. 1

WO 2017/178387 A1 discloses an antenna module for a motor vehicle comprising a bodywork, said antenna module comprising: - an antenna unit suitable for being disposed, in part, inside the motor vehicle under said bodywork and comprising at least one primary antenna disposed on the upper cover of said antenna unit, at least one secondary mounting device, a protective cover suitable for covering said primary antenna and comprising at least one primary mounting device. Said protective cover and said antenna unit are suitable for being mounted together by means of said at least one primary mounting device and said at least one secondary mounting device such that said bodywork is disposed between said protective cover and the upper cover of the antenna unit.

US 2010/231467 A1 discloses a vehicle antenna with a bottom part, comprising a metallic base area, a top latched with the bottom part, and a printed circuit board held between the bottom part and the top and carrying at least one transmission or receiver element, wherein the top has at least one latching hook for latching into a mounting opening of a body part.

WO 2017/046971 A1 discloses an antenna device capable of suppressing influence on a antenna performance even if an electronic device is provided in its vicinity. The antenna device is equipped with a top element and a coil. A casing of a camera is disposed at such a position as not to be right under the top element. The coil is disposed close to the casing in a front-rear direction. A distance between the casing and the coil in the front-rear direction is longer than or equal to 0.00075 times a shortest wavelength of a reception target signal. A maximum antenna efficiency of the antenna device in a predetermined frequency band is higher than or equal to 85% of a maximum antenna efficiency in a case where the camera is not provided.

DE 10 2016 123369 A1 discloses an antenna assembly comprising a support on which at least one antenna element is arranged, and a circuit board; connecting means are provided which electrically connect the at least one antenna element to a contact zone on the circuit board. The disclosed antenna assembly is characterized in that the connecting means are designed as an electrically conductive connecting foil that has a contact area which rests on the contact zone on the circuit board when the support is properly joined to the circuit board.

### SUMMARY

A vehicle antenna according to claim 1 is provided, wherein the vehicle antenna has an antenna case formed in a dual structure of outer and inner cases, so that horizontal deformation of a central portion of the antenna case does not occur and the horizontal width of the vehicle antenna can be slimmer, and thus, a small-sized vehicle antenna can be provided. An object of the present invention is to provide a vehicle antenna capable of maintaining a robust watertight space such that a lower surface end portion of the antenna case forcibly presses a rubber waterproof member and the antenna case and a plastic base plate are fastened by means of a strong hook fastening structure, and thus, even under an external shock, separation of the antenna case from the plastic base plate is prevented and a robust watertight space can be maintained.

To achieve the aforementioned objects, a vehicle antenna according to the present invention accommodates, in an inner space of an antenna case formed in a streamlined dome shape, a conductive base, an antenna part mounted on a plastic base, and a substrate part on which a circuit part is attached, wherein: the antenna case includes an outer case and an inner case; the inner case is formed to have an opened lower surface and an accommodation space therein, accommodates an antenna part including a plurality of radiation elements and a substrate part on which a circuit part is mounted, has fastening holes in a lower peripheral edge portion thereof, and is thereby fixed and fastened to the plastic base by means of screws; and the outer case is formed to have a lower surface opened toward the vehicle roof panel side and have an accommodation space therein, covers the entire outer portion of the inner case fixedly fastened and coupled to the plastic base so that the inner case is inserted thereinto, includes a plurality of main hook parts in an inner surface thereof, so that the main hook parts pass through fastening parts provided to the plastic base and are forcibly hooked and fastened, and includes sub supporters each formed on an inner side on the inner surface in a rectangular fin shape, having an inclination angle slightly further inward than the vertical downward direction, on a line at which the main hook parts are formed, so that the outer case is inserted into the inner case and supported.

The plastic base may include: main hook fastening parts, which are hook through-holes to which the plurality of main hook parts formed in the inner surface of the outer case are respectively fastened, and each of which is formed, on a peripheral edge portion of the plastic base, in a penetrating structure having a rectangular peripheral shape having a height in an upward direction; a plurality of cylindrical case fastening parts formed on the peripheral edge portion to have a diameter smaller than diameters of the fastening holes of the inner case so as to be inserted into the fastening holes of the inner case and screw coupled; a circular conductive base penetration part provided on a central portion of the plastic base so that a lower side of the conductive base passes through a vehicle panel; and fastening holes provided on a peripheral edge portion of the conductive base penetration part and fastened to the conductive base, and thus, the conductive base may be mounted on the fastening holes and fixedly attached by screws.

In addition, the plastic base may include: a substrate mounting part provided on a central portion thereof and having a height in an upward direction on an upper end portion outside the conductive base penetration part; a plurality of cylindrical fastening holes provided on the periphery of the substrate mounting part such that the substrate part, on which the antenna part and the circuit part are mounted, is mounted and fastened to the fastening holes by screws to be fixedly attached; and a waterproof pad mounting part, on which a waterproof pad is mounted, provided on an outer periphery of the substrate mounting part, which is the peripheral edge portion, wherein the main hook fastening parts and the case fastening parts may be formed on the waterproof pad mounting part.

The waterproof pad, which is a rubber pad and is inserted into the outer peripheral portion of the substrate mounting part while closely contacting the outer peripheral portion, may include: a substrate penetration part formed to be slightly larger than the size corresponding to the shape of the substrate mounting part so as to be penetrated by the substrate part; a first end part formed to have a predetermined area, on the outer periphery of the substrate penetration part formed in the central portion, so as to be mounted on the waterproof pad mounting part of the plastic base; a second end part formed as a downward height-difference surface adjacent to the first end portion outside the first end part; and an inclined lid part formed to be inclined as an outermost periphery outside the second end part.

The waterproof pad may include: a plurality of main hook through holes which are provided on an upper surface of the first end part, to which a lower surface end portion of the case edge part of the inner case is in close contact and tightly attached, and through which the main hook parts of the outer case pass through; and a plurality of through holes inserted into the cylindrical case fastening parts of the plastic base, and the lower surface end portion of the case edge part, provided to the outer case, which covers the outer portion of the inner case, closely contacts and is mounted on an upper surface the second end part of the waterproof pad.

The inner case may include: main hook guide parts provided on the lower outer peripheral edge portion thereof and configured to guide the main hook parts formed in the outer case; sub supporter insertion parts provided between the main hook guide parts and configured to support the sub supporters provided to the outer case so that the sub supporters are inserted therein and supported thereby; and a case edge part which is a lower peripheral end surface of the inner case and is provided so as to closely contact an upper surface of the waterproof pad which surrounds the periphery of the plastic base and maintains a close watertight structure.

The conductive base may include: a roof fastening member coupling part provided in a lower portion of the conductive base, protruding in a cylindrical shape, and having a threaded portion on an inner circumferential surface thereof; fastening holes provided, on an upper flat surface portion of the conductive base, so as to be fastened to the plastic base; and stoppers for temporarily fastening the conductive base to a vehicle roof panel.

The vehicle antenna may further include a rubber sealing member including: a circular O-ring part which has a circular shape so as to be attached to surround the peripheral edge portion of the conductive base penetration part of the plastic base, has a periphery of a certain diameter and thickness, and closely contacts the bottom surface part of the plastic base; and a plurality of protruding coupling parts which are provided along the circumference of the O-ring part and are coupled to the plastic base, wherein the protruding coupling parts each may include: an insertion part bent outward from inside in a "C"-shape so as to be inserted in the peripheral edge portion of the conductive base penetration part of the plastic base; and a plurality of protruding coupling holes which are inserted into and coupled to a plurality of fastening protruding parts formed on the peripheral edge portion of the conductive base penetration part formed on the upper surface of the plastic base.

The upper surface of the plastic base may be enclosed up to the peripheral edge by the first end part, the second end part, and the inclined lid part of the waterproof pad, the peripheral edge portion of the conductive base penetration part of the plastic base may be enclosed by the sealing member, and while the O-ring part closely contacts and is coupled to a lower bottom surface portion, the conductive base which passes through the conductive base penetration part formed in the plastic base may be fixedly attached to the plastic base through the fastening holes by means of a coupling member.

According to an embodiment of the present invention, a vehicle antenna accommodates, in an inner space of an antenna case formed in a streamlined dome shape, a conductive base, an antenna part mounted on a plastic base, and a substrate part on which a circuit part is attached, wherein: the antenna case include an outer case and an inner case; the outer case is formed to have a lower surface opened toward the vehicle roof panel side and have an accommodation space therein, covers the entire outer portion of the inner case fixedly fastened and coupled to the plastic base so that the inner case is inserted thereinto, includes a plurality of main hook parts in an inner surface thereof, so that the main hook parts pass through fastening parts provided to the plastic base and are forcibly hooked and fastened, and includes sub supporters each formed on an inner side on the inner surface in a rectangular fin shape, having an inclination angle slightly further inward than the vertical downward direction, on a line at which the main hook parts are formed, and the sub supporters are inserted into sub supporter insertion holes formed in the inner case; and the inner case is formed to have an opened lower surface and an accommodation space therein, accommodates an antenna part comprising a plurality of radiation elements and a substrate part on which a circuit part is mounted, includes main hook guide parts provided on a lower outer peripheral edge portion thereof to guide the main hook parts of the outer case; includes sub supporter insertion parts provided between the main hook guide parts and configured to be penetrated by the sub supporters and support the sub supporters; and includes fastening holes provided in a lower peripheral edge portion thereof and inserted to the fastening holes formed in the plastic base to be thereby fixedly fastened to the plastic base by means of screws.

The plastic base may include: main hook fastening parts, which are hooking through holes to which the main hook parts are fastened corresponding to the plurality of main hook parts formed in the inner surface of the outer case, and each of which is formed, on a peripheral edge portion of the plastic base, in a penetrating structure having a rectangular peripheral shape having a height in an upward direction; a plurality of cylindrical case fastening parts formed on the peripheral edge portion to have a diameter smaller than a diameter of the fastening holes of the inner case so as to be inserted into the fastening holes of the inner case and screw coupled; a circular conductive base penetration part provided on a central portion of the plastic base so that a lower side of the conductive base passes through a vehicle panel; and fastening holes provided on a peripheral edge portion of the conductive base penetration part and fastened to the conductive base, and thus, the conductive base may be mounted on the fastening holes and fixedly attached by screws.

The plastic base may include: a substrate mounting part provided on a central portion thereof and having a height in an upward direction on an upper end portion outside the conductive base penetration part; a plurality of cylindrical fastening holes provided on the periphery of the substrate mounting part such that the substrate part, on which the antenna part and the circuit part are mounted, is mounted and fastened to the fastening holes by screws to be fixedly attached; and a waterproof pad mounting part, on which a waterproof pad is mounted, provided on an outer periphery of the substrate mounting part, which is the peripheral edge portion, wherein the main hook fastening parts and the case fastening parts may be formed on the waterproof pad mounting part.

The waterproof pad, which is a rubber pad and is inserted into the outer peripheral portion of the substrate mounting part while closely contacting the outer peripheral portion, may include: a substrate penetration part formed to be slightly larger than the size corresponding to the shape of the substrate mounting part so as to be penetrated by the substrate part; a first end part formed to have a predetermined area, on the outer periphery of the substrate penetration part formed in the central portion, so as to be mounted on the waterproof pad mounting part of the plastic base; a second end part formed as a downward height-difference surface adjacent to the first end portion outside the first end part; and an inclined lid part formed to be inclined as an outermost periphery outside the second end part.

The waterproof pad may include: a plurality of main hook through holes which are provided on an upper surface of the first end part, to which a lower surface end portion of the case edge part of the inner case is tightly attached, and through which the main hook parts of the outer case pass through; and a plurality of through holes inserted into the cylindrical case fastening parts of the plastic base, and the lower surface end portion of the case edge part, provided to the outer case, which covers the outer portion of the inner case, closely contacts and is mounted on an upper surface the second end part of the waterproof pad.

In the vehicle antenna, the plastic base and the inner case may be fastened by screws and fixedly coupled in a state in which: the substrate part is mounted on the substrate mounting part of the plastic base; the waterproof pad is mounted on the waterproof pad mounting part of the plastic base and surrounds a periphery of the plastic base; the lower surface end portion of the case edge part of the inner case of the antenna case closely contacts and is mounted on the upper surface of the first end part formed on the waterproof pad; the fastening holes provided in the inner case are externally inserted to the outer portions of the cylindrical case fastening parts of the plastic base; and the case edge part, which is the lower surface end portion, is mounted on the upper surface of the waterproof pad inserted into the case fastening part, and the outer portion of the inner case fixedly attached to the plastic base may be inserted such that: the lower surface end portion of the case edge part of the outer case closely contacts and is mounted on the second end part formed on the waterproof pad which covers the outer periphery of the plastic base; the plurality of main hook parts provided in the inner surface of the outer case are guided downward along the main hook guide parts provided to the inner case, pass through the main hook through holes provided to the waterproof pad, and pass through the main hook fastening parts provided to the plastic base and forcibly hooked and fastened; and the sub supporters provided to the outer case are forcibly fitted to the sub supporter insertion hole parts provided in the inner case.

The conductive base may include: a roof fastening member coupling part provided in a lower portion thereof, protruding in a cylindrical shape, and having a threaded portion on an inner circumferential surface thereof; fastening holes provided, on an upper flat surface portion thereof, so as to be fastened to the plastic base; and stoppers for temporarily fastening the conductive base to a vehicle roof panel.

The vehicle antenna may further include rubber sealing member including: a circular O-ring part which has a circular shape so as to be attached to surround the peripheral edge portion of the conductive base penetration part of the plastic base, has a periphery of a certain diameter and thickness, and closely contacts the bottom surface part of the plastic base; and a plurality of protruding coupling parts which are provided along the circumference of the O-ring part and are coupled to the plastic base, wherein the protruding coupling parts each may include: an insertion part bent outward from inside in a "C"-shape so as to be inserted in the peripheral edge portion of the conductive base penetration part of the plastic base; and a plurality of protruding coupling holes which are inserted into and coupled to a plurality of fastening protruding parts formed on the peripheral edge portion of the conductive base penetration part formed on the upper surface of the plastic base.

The upper surface of the plastic base may be enclosed up to the peripheral edge by the first end part, the second end part, and the inclined lid part of the waterproof pad, the peripheral edge portion of the conductive base penetration part of the plastic base may be enclosed by the sealing member, and while the O-ring part closely contacts and is coupled to a lower bottom surface portion, the conductive base which passes through the conductive base penetration part formed in the plastic base may be fixedly attached to the plastic base 200 through the fastening holes by means of a coupling member.

As described above, in a vehicle antenna of the present invention, an antenna case is formed in a dual structure of outer and inner cases, so that horizontal deformation of a central portion of the antenna case does not occur and the horizontal width of the vehicle antenna can be slimmer, and thus, the present invention has an effect of providing a small-sized vehicle antenna. In addition, a lower surface end portion of the antenna case forcibly presses a rubber waterproof member and the antenna case and a plastic base plate are fastened by means of a strong hook fastening structure. Therefore, even under an external shock, separation of the antenna case from the plastic base plate is prevented and a robust watertight space is maintained. Thus, the present invention has an effect of continuously maintaining the antenna performance by means of the watertight, waterproof structure which prevents penetration of water or contaminants into an antenna and circuit part which are accommodated in the inner space of the case.

### BRIEF DESCRIPTION OF THE DRAWINGS

Exemplary embodiments can be understood in more detail from the following description taken in conjunction with the accompanying drawings, in which:
FIG. 1 is a perspective view of a vehicle antenna according to a related art;
FIG. 2 is an overall perspective view of a vehicle antenna according to an embodiment of the present invention;
FIG. 3 is an exploded perspective view of a vehicle antenna according to an embodiment of the present invention;
FIG. 4 is a perspective view illustrating an inner case mounted on a vehicle antenna according to an embodiment of the present invention;
FIG. 5 is a perspective view illustrating an inner space of an outer case in a vehicle antenna according to an embodiment of the present invention;
FIG. 6 is an exploded perspective view of a plastic base, a rubber pad, and a sealing member of a vehicle antenna according to an embodiment of the present invention;
FIG. 7 is a plan view illustrating a real object of a structure in which a sealing member is fastened and coupled to a plastic base in a vehicle antenna according to an embodiment of the present invention;
FIG. 8 is a view for describing a structure in which a conductive base is coupled to a plastic base in a vehicle antenna according to an embodiment of the present invention;
FIG. 9 is a bottom view of a structure in which a conductive base and a sealing member are coupled to a plastic base in a vehicle antenna according to an embodiment of the present invention;
FIG. 10 is a view illustrating a real object for describing a state in which a conductive base and a sealing member are coupled to a plastic base in a vehicle antenna according to an embodiment of the present invention;
FIG. 11 is a perspective view illustrating a structure in which a substrate part to which an antenna part is attached and fixed after mounting a conductive base in a vehicle antenna according to an embodiment of the present invention;
FIG. 12 is a view for describing a state in which an outer case is coupled in a state in which an inner case is assembled in a vehicle antenna according to an embodiment of the present invention;
FIG. 13 is a perspective view illustrating a state in which an outer case is coupled in a vehicle antenna according to an embodiment of the present invention; and
FIGS. 14 to 16 are detail views for describing a fastening state in which an outer case is assembled to an inner case in a vehicle antenna according to an embodiment of the present invention.

### DETAILED DESCRIPTION OF EMBODIMENTS

Hereinafter, preferred embodiments of the present invention will be described with reference to the accompanying drawings.

In all the following drawings, like reference numerals refer to like components and repeated description will not be provided, and terms used in the following are defined considering the function in the present invention, and it is specified that the terms should be interpreted as a meaning conformable to the technical idea of the present invention and the inherent commonly used meaning.

In the following description of the present invention, a detailed description of known functions and configurations incorporated herein will be omitted to avoid making the subject matter of the present invention unclear.

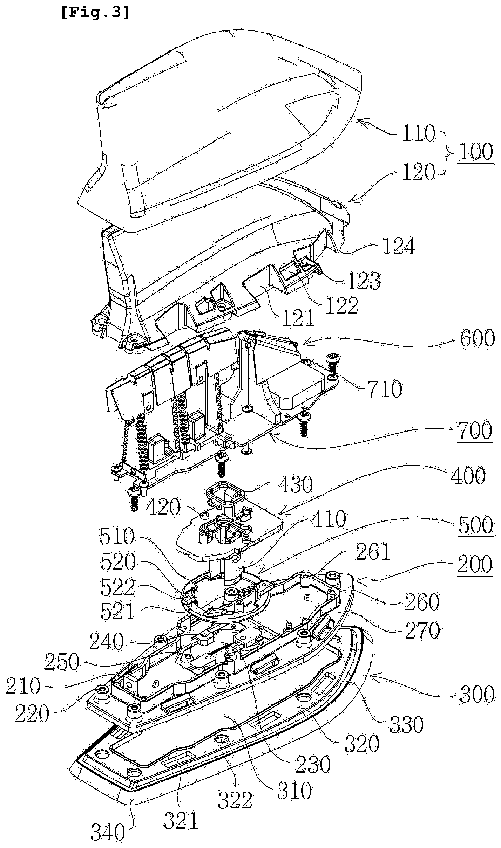

FIG. 2 is an overall perspective view of a vehicle antenna device according to an embodiment of the present invention, and FIG. 3 is an exploded perspective view of a vehicle antenna device according to an embodiment of the present invention.

As shown in the drawings, referring to FIGS. 2 and 3, a vehicle antenna 1 according to an embodiment of the present invention includes: an insulating antenna case 100 which has a shark fin shape formed in a streamlined dome shape and has a lower surface open toward a vehicle roof panel 800 side to form an accommodation space therein; an insulating plastic base 200 into which the antenna case 100 is inserted and fastened; a rubber waterproof pad 300 which surrounds a periphery of the plastic base 200 and maintains a robust watertight structure; a conductive base 400 which is fixedly coupled to the plastic base 200 and brings the plastic base 200 into close contact with and to be attached to the vehicle roof panel 800; a sealing member 500 which is fixedly attached to the plastic base 200 and blocks the penetration of water when closely attaching the plastic base 200 to the roof panel 800 to thereby maintain a watertight structure; an antenna part 600, which is fixedly coupled to the plastic base 200 and the conductive base 400 and includes a plurality of radiation elements located in the inner accommodation space of the antenna case 100 and having multiple operating frequencies; and a substrate part 700 to which a circuit part (not shown) is mounted.

As shown in FIGS. 2 and 3, the antenna case 100 has a dual structure configured from an outer case 110 and an inner case 120, the inner case 120 is located in the inner accommodation space of the outer case 110, and the inner case 120 is formed to have an opened lower surface on the vehicle roof panel side and thereby have therein an accommodation space, and thus accommodates the antenna part 600, which includes a plurality of radiation elements having multiple operating frequencies, and the substrate part 700 on which a circuit part (not shown) is mounted. Accordingly, the outer case 110 has a shark fin shape formed in a streamlined dome shape by a structure which covers the inner case 120, and the inner case 120 is also formed in a similar shape to the outer case.

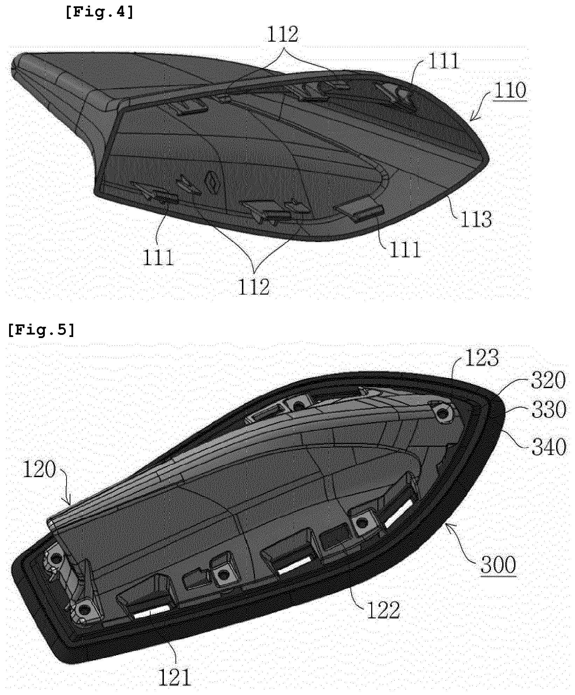

FIG. 4 is a perspective view illustrating an inner case mounted on a vehicle antenna according to an embodiment of the present invention, and FIG. 5 is a perspective view illustrating an inner space of an outer case in a vehicle antenna according to an embodiment of the present invention.

As shown in the drawings, the outer case 110 and the inner case 120 will be described in detail as follows.

The outer case 110 is formed to have a lower surface opened toward the vehicle roof panel 800 side, has the accommodation space therein, thereby contains the inner case 120, and has a plurality of main hook parts 111 vertically formed on an inner surface thereof in a hooking structure with a rectangular fin and fastened to the plastic base 200. Favorably, three main hook parts 111 being respectively provided on the left and right sides.

In addition, on the inner surface of the outer case 110, a plurality of sub supports 112 are provided which are formed in rectangular fin shapes having an inclination angle in a slightly further inward direction than the vertical direction toward the inside of lines at which the main hook parts 111 are formed, and thus, the outer case 110 fastened and coupled to the inner case 120 are prevented from being easily separated. Favorably, a total of four sub supporters are formed between the three main hook parts 111 respectively provided on the left and right sides.

Furthermore, in the outer case 110, an opening part, which is a lower end surface, forms a case edge part 113, closely contacts the upper surface of the rubber waterproof pad 300 which surrounds the periphery of the plastic base 200 and maintains a strong watertight structure, and forms a waterproof structure so that water penetration into the antenna case 100 is prevented.

The inner case 120 firstly forms a waterproof structure against outside by means of the outer case 110, accommodates the substrate part 700, on which the antenna part 600 and the circuit part (not shown) are mounted in the accommodation space formed inside the inner case 120, and forms a watertight structure together with the plastic base 200 to prevent the penetration of contaminating material such as dusts and rain water.

Describing the structure in more detail: in the inner case 120, a main hook guide parts 111 are formed which guides the main hook parts 11 of the outer case 110; sub supporter insertion parts 122, into which the sub supporters 112 provided to the outer case 110 are inserted, are formed between the main hook guide parts 121; and a plurality of fastening holes 123, which are fastened to the plastic base 200 and fixedly coupled by screws, are formed in the lower peripheral edge portions of the inner case 120.

In addition, the lower peripheral end surface of the inner case 120 is formed as a case edge part 124, an opening part which is the lower end part of the case edge part 124 surrounds the periphery of the plastic base 200 and closely contact the upper surface of the rubber water pad 300 which maintains a strong watertight structure, and thus forms a waterproof structure so as to prevent water penetration into the antenna part 600 provided inside the accommodation space of the inner case 120 and the substrate part 700 on which the circuit part (not shown) is mounted.

Accordingly, water penetration into the antenna part 600 and the substrate part 700 is prevented by means of the waterproof structure with a dual structure in which opening parts, which are the case edge parts of the outer case 110 and the inner case 120, surround the periphery of the plastic base 200 and closely contacts the upper surface of the rubber waterproof pad 300 which maintains the robust watertight structure. Therefore, the performance degradation of the vehicle antenna 1 is prevented, and there is an effect in that various highfrequency characteristics of the vehicle antenna can be continuously maintained.

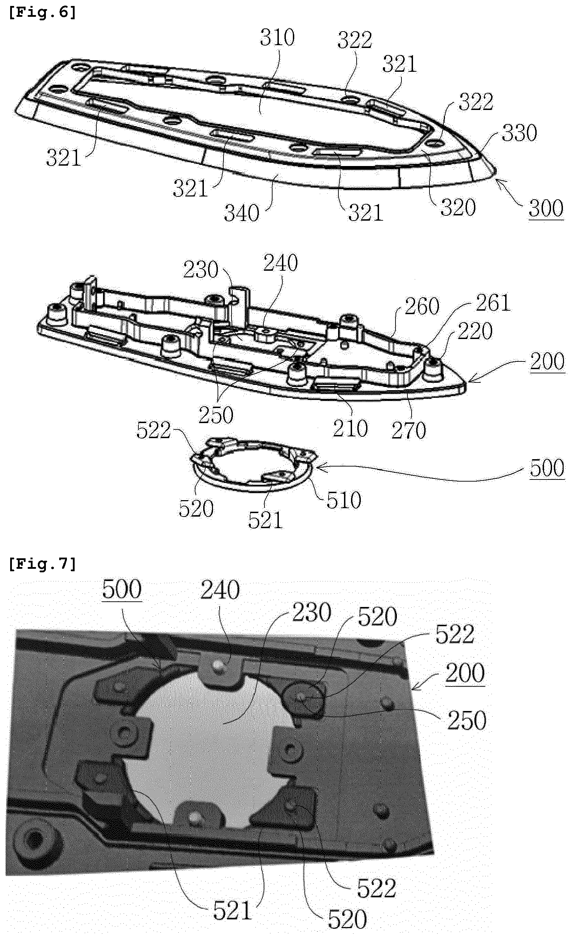

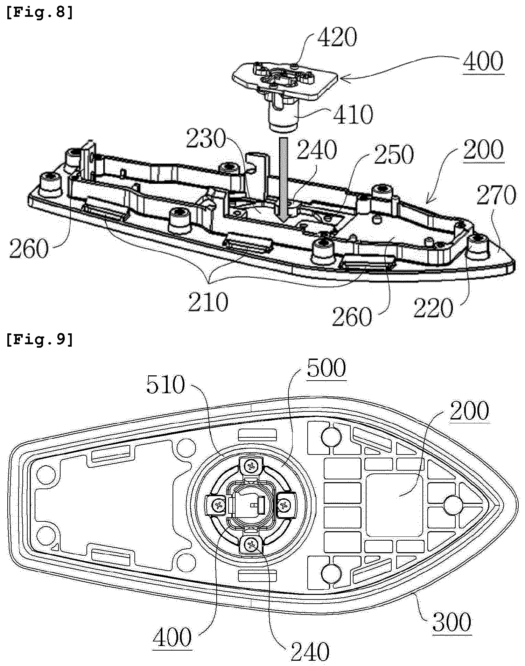

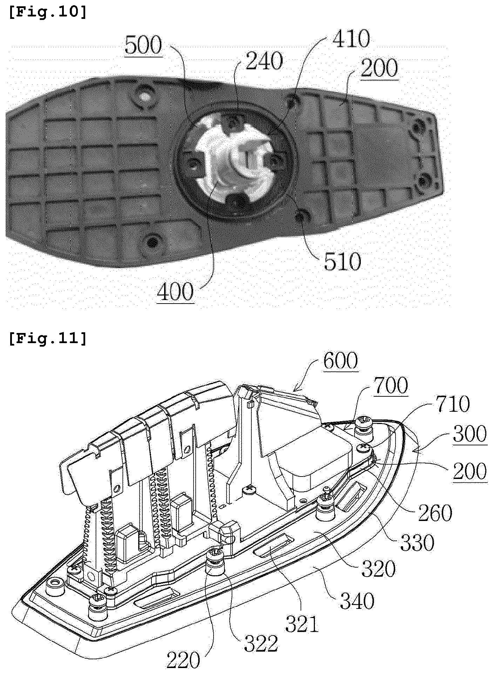

FIG. 6 is an exploded perspective view of a plastic base, a rubber pad, and a sealing member of a vehicle antenna according to an embodiment of the present invention, FIG. 7 is a plan view illustrating a real object of a structure in which a sealing member is fastened and coupled to a plastic base in a vehicle antenna according to an embodiment of the present invention, FIG. 8 is a view for describing a structure in which a conductive base is coupled to a plastic base in a vehicle antenna according to an embodiment of the present invention, FIG. 9 is a bottom view of a structure in which a conductive base and a sealing member are coupled to a plastic base in a vehicle antenna according to an embodiment of the present invention, FIG. 10 is a view illustrating a real object for describing a state in which a conductive base and a sealing member are coupled to a plastic base in a vehicle antenna according to an embodiment of the present invention, and FIG. 11 is a perspective view illustrating a structure in which a substrate part to which an antenna part is attached and fixed after mounting a conductive base in a vehicle antenna according to an embodiment of the present invention.

As shown in FIG. 6, referring to FIG. 3, the plastic base 200 has a similar shape to the outer peripheral shape of the case edge part 113, which is the lower surface of the outer case 110 of the antenna case 100 so as to be fixedly coupled to the antenna case 100, and the outer periphery of the plastic base 200 is surrounded by the waterproof pad 300. The plastic base 200 is provided with a conductive base penetration part 230 on the central portion thereof so that the conductive base is penetrated, and a lower portion of the conductive base 400 formed to be smaller than the plastic base 200 passes through the conductive base penetration part 230 of the plastic base 200 and an upper portion of the conductive base is mounted and then fixedly mounted on the plastic base 200. Furthermore, the substrate part 710 on which the antenna part 600 is attached is fixedly attached to the plastic base.

Referring to FIGS. 3 to 6, in the plastic base 200: a plurality of main hook fastening parts 210, which are through holes respectively hooked and fastened to the plurality of main hook parts 111 formed on the inner surface of the outer case 110, are formed on the peripheral edge portions of the plastic base; a plurality of cylindrical case fastening parts 220, which are inserted into the fastening holes 123 of the inner case 120 and screw coupled, are formed on the peripheral edge portions of the plastic base; a circular conductive base penetration part 230 is provided on the central portion of the plastic base 200 so that the lower side of the conductive base 400 penetrates the vehicle roof panel 800; and fastening holes 240, which are fastened to the conductive base, are provided on the peripheral edge portion of the conductive base penetration part 230 and the conductive base 400 is mounted onto the fastening holes 240 and fixedly coupled by screws.

Here, the cylindrical case fastening parts 220 are formed to have smaller diameters than the diameters of the fastening holes 123 of the inner case 120 so as to be inserted into the fastening holes 123 formed in the outer edge portion of the inner case 120.

In addition, in the peripheral edge portion of the conductive base penetration part 230, a plurality of fastening protruding parts 250 for fastening the sealing member 600 are separately formed from the fastening holes 240 for fastening the conductive base, and the sealing member 500 is inserted and coupled into the fastening protruding parts.

Here, the plurality of main hook fastening parts 210 of the plastic base 200 has a penetrating structure formed by a rectangular periphery having a height in the upward direction.

In addition, a substrate mounting part 260 having a height in the upward direction is formed on an outer upper end part of the conductive base penetration part 230 of the plastic base 200, a plurality of cylindrical fastening holes 261are formed in the substrate mounting part 260, so that the substrate part 700, on which the antenna part 600 and the circuit part (not shown) are mounted, is mounted on the substrate mounting part 260, and the plurality of fastening holes 261 provided on the periphery of the substrate mounting part 260 and the fastening holes 710 provided on the substrate part 700 are fastened and fixedly coupled by screws.

On the outer peripheral edges of the substrate mounting part of the plastic base 200, a waterproof pad mounting part 270 is formed which includes the main hook fastening parts 210 and the case fastening parts 220 and on which the waterproof pad 300 is mounted.

The waterproof pad 330 is a rubber pad, has a central portion which closely contacts and is inserted into an outer peripheral portion of the substrate mounting part 260 having a certain height (approximately 0.5 mm) upward from the plastic base 200, and includes: a substrate penetration part 310 which is formed to be slightly larger than the size corresponding to the shape of the substrate mounting part 260 so as to be penetrated by the substrate part 700; a first end part 320 formed to have a predetermined area on an outer periphery of the substrate penetration part 310 formed in the central portion; a second end part 330 formed outside the first end part 320 as a height difference surface to be adjacent to the first end part 320; and an inclined lid part 340 formed to have inclination outside the second end part 330 as the outermost periphery.

The first end part 320, the second end part 330, and the inclined lid part 340 are formed in a structure which completely cover the entire upper portions of the waterproof pad mounting part 270 of the plastic base 200 and the plastic base edge part 280, that is, the waterproof pad 300 is formed in a structure which covers the outer peripheral portion excluding the conductive base penetration part 230 and the substrate part 260 which are formed in the central portion of the plastic base 200.

Here, in the first end part 320, a plurality of main hook through holes 321, through which the main hook parts 111 of the outer case 110 in the antenna case 100 passes through, are formed in the number as much as the number of the main hook parts 111.

Accordingly, on the upper surface of the first end part 320, an opening portion, which is a lower surface end part of the case edge part 124 of the inner case 120, is mounted while being brought into close contact with the upper surface, and while the through holes 322 of the first end part 320 are inserted into the cylindrical case fastening parts 220 of the plastic base 200, the case fastening parts 220 and the fastening holes 123 of the inner case 120 formed to be corresponding to the upper surface of the upper surfaces of the case fastening parts 220 are fixedly coupled by screws.

In addition, on the upper surface of the second end part 330, an opening portion, which is the lower surface end part of the case edge part 113 of the outer case 110, is mounted while being brought into close contact with the upper surface, and are fastened by means of forcible hooking such that the main hook parts 111 formed in the inner surface of the outer case 110, which covers the outer peripheral surface of the inner case 120, downwardly pass through the main hook through holes 321 of the waterproof pad 300 along the main hook guide parts 121 of the inner case 120, and passes through the main hook fastening parts 210 of the plastic base 200.

Accordingly, as such, the main hook parts 111 of the outer case 110 are fastened to the main hook fastening parts 210 of the plastic base 200 by forcible hooking, and therefore the length from the case edge part 113 of the outer case 110 to the positions, at which the main hook parts 111 are formed, is provided to be smaller than the penetration length, and thus, the opening portion which is the lower surface end part of the case edge part 113 is brought into close contact with and mounted on the upper surface of the second end part 330 of the waterproof pad 300.

Here, a strong watertight structure is formed due to a close contact to the waterproof pad 300 by means of a dual fastening structure in which the main hook parts 111 of the outer case 110 and the main hook fastening parts 210 of the plastic base 200 are fastened, and at the same time, the sub supporters 112 of the outer case 110 are forcibly fitted into the sub supporter insertion holes 122 formed in the inner case 120.

Accordingly, the waterproof pad 300 is fixedly coupled to the upper periphery of the plastic base 200, and is pressed by opening portions which are the lower surface end parts formed by the peripheral case edge part 113 and 124 of the antenna case 100, and thus, a watertight waterproof structure which prevents contaminating substances such as dusts and water from penetrating into the antenna part 600 which is attached inside the sealed space by the plastic base 200 and the cover 100.

Referring to FIGS. 3 and 6, the sealing member 500 includes: an O-ring part 510 which is made of a rubber material, has a circular shape so as to be attached to surround the peripheral edge portion of the conductive base penetration part 230 of the plastic base 200, has a periphery of a certain diameter and thickness, and closely contacts the bottom surface part of the plastic base 200; and a plurality of protruding coupling parts 520 which are provided along the circumference of the O-ring part 510 and are coupled upward to the plastic base 200, wherein the protruding coupling parts 520 each have: an insertion part 521 bent outward from inside in a "C"-shape so as to be inserted in the peripheral edge portion of the conductive base penetration part 230 of the plastic base 200, and a plurality of protruding coupling holes 522 which are inserted into and coupled to a plurality of fastening protruding parts 250 formed on the peripheral edge portion of the conductive base penetration part 230 formed on the upper surface of the plastic base 200.

Accordingly, a structure is formed such that: the O-ring part 510 of the sealing member 500 closely contact and coupled to the bottom surface part of the plastic base 200; and the protruding coupling parts 520 are fixedly coupled such that while the "C"-shaped insertion parts 521 are inserted into the periphery of the conductive base penetration part 230 of the plastic base 200, the protruding coupling holes 522 are fastened to the fastening protruding parts 250 provided on the upper surface of the plastic base 200.

FIG. 7 is a plan view of a real object illustrating a structure in which the sealing member 500 is fastened and coupled to the plastic base 200 in the vehicle antenna 1, and as shown in FIG. 7, the insertion parts 521 bent in a "C"-shape and provided to the sealing member 500 are inserted into the peripheral portion of the conductive base penetration part 230 in the plastic base 200, and the protruding coupling holes 522 formed in the protruding coupling parts 520 are forcibly pressed, inserted, and fastened to the plurality of fastening protruding parts 250 formed in the peripheral edge portion of the conductive base penetration part 230 formed on the upper surface of the plastic base 200.

FIG. 8 is a view for describing a process in which the conductive base 400 is coupled and attached to the plastic base 200 in the vehicle antenna 1, and as shown in FIG. 8, the conductive base 400 has a lower portion protruding in a circular cylinder shape, a roof fastening member coupling part 410 having a threaded portion in the inner circumferential surface of the conductive base, and fastening holes 420, for fastening the plastic base 200, on a flat surface portion over the roof fastening member coupling part 410. In addition, when fixing and attaching the vehicle antenna 1 on a roof panel 800, a stopper 530 for temporarily fastening the antenna to the roof panel 800 in order to facilitate the assembly process may be provided.

Accordingly, in a state in which the roof fastening member coupling part 410 protruding to the lower side of the conductive base penetrates the conductive base 400 penetration part 230 formed in the central portion of the plastic base 200, and the upper flat surface portion of the conductive base 400 is mounted on the peripheral edge portion of the conductive base penetration part 230 of the plastic base 200, the fastening holes 420 provided to the conductive base 400 and the fastening holes 240 provided to the plastic base 200 are fixedly attached and coupled by screws. As shown in FIG. 7, while the sealing member 500 is fastened to the plastic base 200 and the bottom surface portion of the flat surface portion of the conductive base 400 covers the upper portion of the sealing member 500, the conductive base 400 is fixedly attached to the fastening holes 240 formed in the upper surface of the plastic base shown in FIG. 8.

FIG. 9 is a bottom view of a structure in which the waterproof pad 300, the conductive base 400, and the sealing member 500 are coupled to the plastic base 200 in the vehicle antenna 1 according to an embodiment of the present invention, and FIG. 10 is a view of a real object for describing a state in which the conductive base 400 and the sealing member 500 are coupled to the plastic base 200 in the vehicle antenna 1 according to an embodiment of the present invention.

As shown in the drawings, the upper surface of the plastic base 200 is enclosed up to the peripheral edge by the first end part 320, the second end part 320, and the inclined lid part 340 of the waterproof pad 300, the peripheral edge portion of the conductive base penetration part 310 of the plastic base 200 is enclosed by the sealing member 500, and while the O-ring part 510 closely contacts and is coupled to a lower bottom surface portion, the conductive base 400 which passes through the conductive base penetration part 310 formed in the plastic base 200 is fixedly attached to the plastic base 200 through the fastening holes 240 by means of coupling members.

Accordingly, on the upper side of the vehicle antenna 1 according to the present invention, as described with reference to FIGS. 3 to 5, a robust watertight structure is formed by the waterproof pad 300 and the antenna case 100, and as described with reference to FIGS. 6 and 10, and in the lower bottom surface portion, a watertight structure is formed such that when the roof panel coupling part 410 of the conductive base 400 is fastened to the roof panel 800 by the roof panel fastening device (not shown) using screws, the plastic base 200, on which the conductive base 400 is fixedly attached, closely contacts and is fixed to the roof panel 800, and at this point, the O-ring part 510 of the sealing member 500 closely fixed to the plastic base 200 closely contacts an end surface of the roof panel 800. Thus, water, contaminants, or the like are prevented from penetrating from the bottom surface of the plastic base 200 into the substrate part 700 which is provided in the inner space of the vehicle antenna 1 and on which the antenna part 600 and the circuit part are fixed, and there is an effect in that the performance of the antenna can be continuously maintained.

FIG. 11 is a perspective view illustrating a structure in which the substrate part 700, on which the antenna part 600 and the circuit part are attached and fixed, is attached after attaching the conductive base 400 in the vehicle antenna 1 according to an embodiment of the present invention. As shown in FIG. 11, while the waterproof pad 300, the sealing member 500, and the conductive base 400 are attached to the plastic base 200 as in FIG. 9, the substrate part 700, on which the antenna part 600 and the circuit part are attached, is mounted on the substrate mounting part 260 of the plastic base 200, and then, are fastened to each other by fastening means such as screws through the fastening holes 261 provided in the substrate mounting part 260 for fastening the substrate and the fastening holes 710 provided in the substrate part 700.

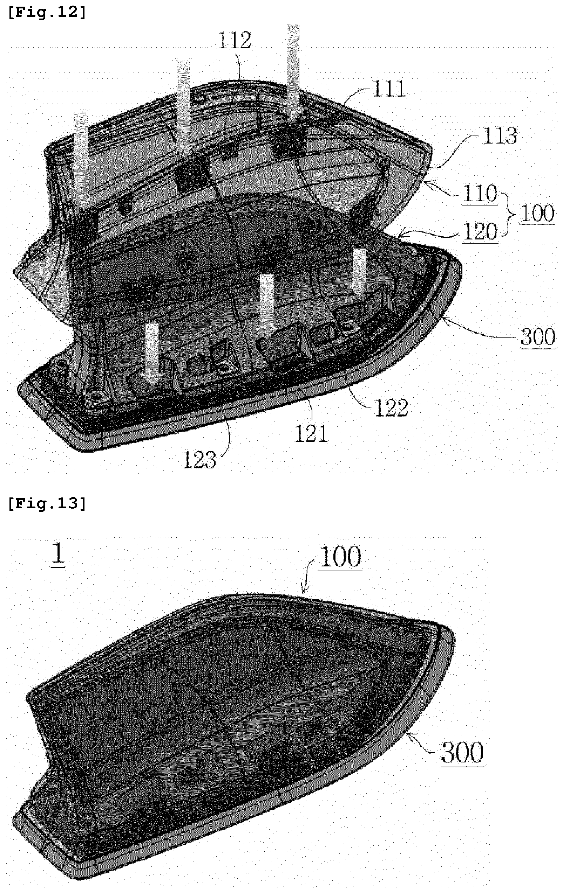

FIG. 12 is a view for describing a state in which the outer case 110 is coupled in a state in which the inner case 120 has been assembled in the vehicle antenna 1 according to an embodiment of the present invention, and FIG. 13 is a perspective view illustrating a state in which the outer case is coupled in the vehicle antenna 1 according to an embodiment of the present invention.

As shown in the drawings, with reference to FIGS. 4, 5, and 11, in a state in which the conductive base 400 is attached to the plastic base 200 and then the substrate part 700, on which the antenna part 600 and the circuit part are fixedly attached, is attached, the inner case 120 of the antenna case 100 covers the resultant.

In more detail, it can be found that the vehicle antenna 1 according to an embodiment of the present invention, as illustrated in FIG. 11, is formed in a structure, in which: the substrate part 700, on which the antenna part 600 and the circuit part are fixedly attached, is mounted on the upper surface of the plastic base 200 and fixedly fastened to the substrate mounting part 260 positioned at the central region of the plastic base 200, and a waterproof pad mounting part 270, which is an edge portion of the plastic base 200 is formed in a structure surrounded by the waterproof pad 300 from the outer periphery of the substrate mounting part 260 on which the substrate part 700 is mounted.

As shown in the drawings, the process in which the inner case 120 is attached in the vehicle antenna according to an embodiment of the present invention will be described. As described above, while the substrate part 700 is mounted on the substrate mounting part 260 of the plastic base 200 and the waterproof pad 300 is mounted on the waterproof pad mounting part 270 of the plastic base 200 and surrounds the substrate mounting part 260, the lower surface end part of the case edge part 124 of the inner case 120 of the antenna case 100 is closely mounted on the upper surface of the first end part formed on the waterproof pad 300, and at this point, in a state shown in FIG. 4 which illustrates a structure in which the fastening holes 123 provided to the inner case 120 are externally inserted to the outer portion of the circular cylinder-shaped case fastening parts 220 of the plastic base 200, and the case edge part 124, which are lower end part, are mounted on the upper surface of the waterproof pad 300 inserted into the case fastening parts 220, and the plastic base 200 and the inner case 120 are fastened and coupled by screws, FIG. 12 illustrates a state in which the outer case 110 shown in FIG. 5 is externally inserted into the inner case 120.

FIG. 13 is a perspective view illustrating a state in which the outer case is coupled in the vehicle antenna according to an embodiment of the present invention. As shown in the drawings, in the vehicle antenna 1 according to an embodiment of the present invention, the process of externally inserting the outer case 110 into the inner case 120 will be described. The lower surface end part of the case edge part 113 of the outer case 110 closely contact and is mounted on the upper surface of the second end part 330 formed on the waterproof pad 300 which covers the outer periphery of the plastic base 200, and the plurality of main hook parts 111 provided on the inner surface of the outer case 110 are guided along the main hook guide parts 121 provided to the inner case 120, pass through the main hook through holes 321 provided in the waterproof pad 300, and then pass through the main hook fastening parts 210 provided to the plastic base 200 and are forcibly hooked and fastened. In addition, the sub supporters 112 provided to the outer case 110 are forcibly fitted to and supported by the sub supporter insertion hole parts 122 provided to the inner case 120. As such, the main hook parts 111 are guided downward along the main hook guide parts 121 provided to the inner case 120, so that the position alignment becomes easy and the fixability is improved.

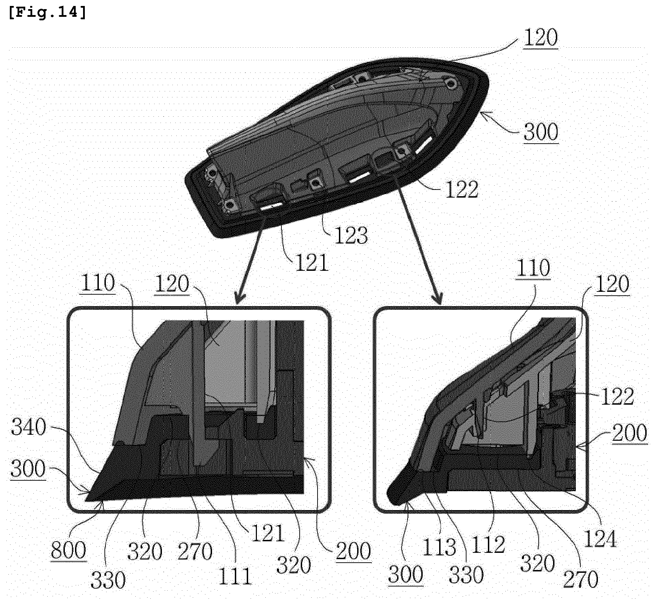

FIGS. 14 to 16 are detail views for describing a fastening state in which the outer case is assembled to the inner case in the vehicle antenna according to an embodiment of the present invention.

As shown in the figure, in a state in which the first end part 320 and the second end part 330 of the waterproof pad 300 are mounted on the waterproof pad mounting part 270 provided to the plastic base 200, the inclined lid part 340 of the waterproof pad 300 is formed in a structure surrounding the peripheral edge of the plastic base 200, the lower surface end parts of the case edge part 124 of the inner case 120 is closely mounted to the upper surface of the first end part 320 of the waterproof pad 300, and the case fastening parts 220 of the plastic base 200 are inserted into the fastening holes 123 of the inner case 120, and thus, the plastic base 200 and the inner case 120 are fastened and coupled by a fastening means such as screws.

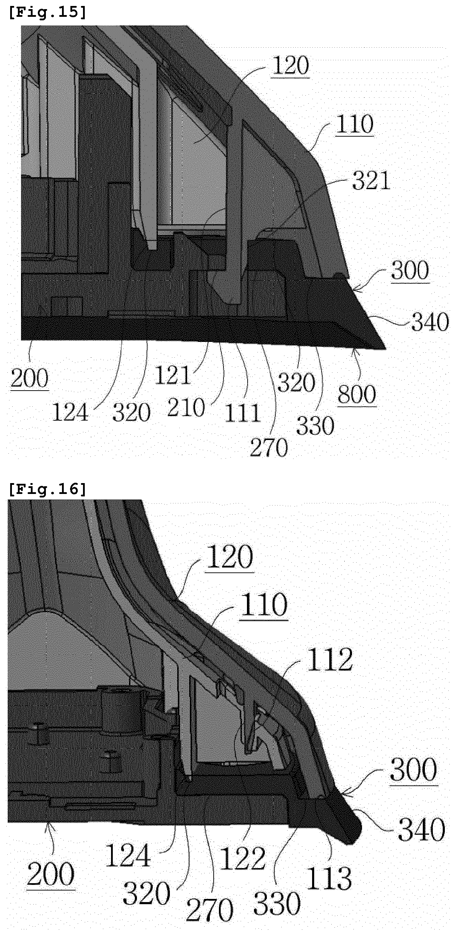

As such, in a state in which the inner case 120 is fixedly fastened to the plastic base 200, as illustrated in FIGS. 15 and 16, the outer case 110 is coupled to the inner case 120 while surrounding the outer portion of the inner case 120, and then, is closely fixed to the vehicle roof panel 800.

In more detail, FIG. 15 is an expanded view of the view on the left in FIG. 14 and is provided to describe in detail the hooking state of the main hook parts 111 of the outer case. As shown in FIG. 15, the main hook parts 111 of the outer case 110 are guided downward along the main hook guide parts 121 formed in the inner case 120, pass through the main hook through holes 321 provided to the plastic base 200, and are fastened and coupled by forcible hooking. At this point, due to the forcible hooking, the lower surface end part of the case edge part 113 of the outer case 110 closely contacts the upper surface of the second end part 330 of the waterproof pad 300 mounted on the waterproof pad mounting pad 270 of the plastic base 200, and the lower surface end part of the case edge part 124 of the inner case 120 also closely contacts the upper surface of the first end part 320 of the waterproof pad 300 mounted on the waterproof pad mounting part 270 of the plastic base 200, and thus, a watertight structure, in which water does not penetrate into the antenna case 100 on the upper side of the vehicle antenna 1, is formed.

In addition, when the vehicle antenna 1 according to the present invention is fixed and mounted on the roof panel 800, a dual watertight structure is formed such that: a portion of the lower surface of the inclined lid part 340, which is formed to incline, as the outermost periphery of the rubber waterproof pad 300, outside the second end part 330 of the waterproof pad 300 which is mounted on the waterproof pad mounting part 270 of the plastic base 200 and surrounds the outer periphery of the plastic case 200, closely contacts the upper surface of the roof panel 800, and thus forms a watertight structure to firstly block the water penetration on the lower side of the vehicle antenna 1; and the water penetration on the lower side of the vehicle antenna 1 is secondly blocked by a contact structure in which the O-ring part 510 of the sealing member 500 provided on the peripheral portion of the central penetration part of the plastic base 200 closely contact the upper surface of the roof panel 800.

FIG. 16 is an expanded view of the view on the right in FIG. 14 and is provided to describe in detail the state in which the sub supporters 112 of the outer case are inserted. As shown in FIG. 16, the sub supports 112, which are formed to have a slight oblique inclination angle further inward than the vertical downward direction inside the outer case 110 than the main hook parts 111 of the outer case 110, are inserted into the sub supporter insertion holes 122 formed in the inner case 120.

More specifically, the sub supporters 112 of the outer case 110 pass through the sub supporter insertion holes 122, which are provided to the inner case 120 and closely contact the upper surface of the first end part 320 of the waterproof pad 300 mounted on the waterproof pad mounting part 270 of the plastic base 200, and firmly support the inner walls of the sub supporter insertion holes 122.

At this point, on the upper side of the vehicle antenna 1, a watertight structure, in which water penetration into the antenna case 100 is prevented, is formed such that: the lower surface end part of the case edge part 113 of the outer case 110 closely contacts the upper surface of the second end part 330 of the waterproof pad 300 mounted on the waterproof pad mounting part 270 of the plastic base 200; and the lower surface of the case edge part 124 of the inner case 120 closely contacts the upper surface of the first end part 320 of the waterproof pad 300 mounted on the waterproof pad mounting part 270 of the plastic base 200.

Meanwhile, as described above, forming the sub supporters 112, which are separately provided on the inner surface of the outer case 100 from the main hook parts 111, are obliquely formed inside to have an inclination angle is to increase the convenience in assembly such that difficulty in assembly is minimized by allowing the sub supporters 112 of the outer case 110 to be obliquely guided and naturally inserted into the sub supporter insertion holes 122 provided to the inner case 120.

Accordingly, in order to separate the outer case 110 from the inner case 120, hooking part protrusions (no reference numeral) located on the lower surfaces of the main hook parts 111 should be moved by approximately 1 mm from the hooked positions of the main hook part fastening parts 210 of the plastic base 200. At this point, the sub supporters 112 formed to be spaced a certain distance from the main hook parts 111 are inserted into the sub supporter insertion holes 122 of the inner case 120 and closely contact and support the inner walls of the sub supporter insertion holes 11. Therefore, the hooking part protrusions (no reference numeral) of the main hook parts 111 are in a state in which the hooking part protrusions can never be unfastened from positions hooked to the main hook fastening parts 210 of the plastic base 200.

With such configurations, even if an external force is applied, the inner case 120 is firmly screw coupled to the plastic base 200, and while the sub supporters 112 of the outer case 110 are inserted into the sub supporter insertion holes 122 of the inner case, the main hook parts 111 of the outer case 110 are forcibly hooked and fastened to the main hook fastening parts 210 of the plastic base 200. Therefore, the outer case 110 forms a firm fastening structure which can never be out of position. That is, the sub supporters 112 of the outer case 110 have an effect of preventing the outer case 110 from being easily separated from the plastic base 200 even under a shock from the outside by functioning as supporters which are inserted into the sub supporter insertion holes 112 and suppress a horizontal movement of and support the main hook parts 111 so that the main hook parts 111 can never move horizontally, that is, horizontal deformation can never occur.

In addition, since the lower end parts of the case edge parts 113 and 123 provided to the outer and inner cases 110 and 120 of the antenna case 100 are forcibly pressed against and fastened to the plastic base 200 on the upper surface of the rubber waterproof pad 300, a close watertight space can be ensured. In addition, while the inclined lid part 340 of the waterproof pad 300 surrounds edge portions including the waterproof pad mounting part 270 of the plastic base 200, the lower end part of the inclined lid part closely contacts the vehicle roof panel 800, and thus, waterproofness may be increased. Furthermore, since the O-ring part 510 of the sealing member 500 closely contacts the vehicle roof panel 800 while surrounding the peripheral edge portion of the conductive base penetration part 230 so as to make the conductive base penetration part 230 of the plastic base 200 to be waterproof, and closely contacts the vehicle roof panel 800 to thereby further increase the waterproofness. Therefore, penetration of water, contaminants, and the like into the substrate part 700, on which the antenna part 600 and the circuit part are mounted and which is located in the inner watertight space inside the inner case 120 of the antenna case 100, is prevented, and there is no concern about corrosion of the antenna part 600 and the circuit part. Therefore, there is an effect in that degradation in antenna performance is prevented and various performance of the antenna can be continuously maintained.

While the present invention has been described in detail, it will be clear that the above-described embodiments are merely exemplarily provided and do not limit the scope of protection of the invention, and it will be understood that modifications of components of such a degree that can be equivalently replaced without departing from the scope of protection of the invention as provided by the appended claims will fall within the scope of protection of the present invention.

## Claims

1. A vehicle antenna comprising an antenna case (100), a conductive base (400), an antenna part (600), a plastic base (200), a substrate part (700), and a circuit part; wherein the antenna case is configured to accommodate, in an inner space of the antenna case (100) formed in a streamlined dome shape, the conductive base (400), the antenna part (600) mounted on the plastic base (200), and the substrate part (700) on which a circuit part is attached, wherein:
the antenna case (100) comprises an outer case (110) and an inner case (120);
the inner case (120) is formed to have an opened lower surface and an accommodation space therein, is configured to accommodate the antenna part (600) comprising a plurality of radiation elements and the substrate part (700) on which the circuit part is mounted, has fastening holes (123) in a lower peripheral edge portion thereof, and is thereby configured to be fixed and fastened to the plastic base (200) by means of screws; and
the outer case (110) is formed to have a lower surface opened toward a vehicle roof panel side and an accommodation space therein, covers the entire outer portion of the inner case (120) fixedly fastened and coupled to the plastic base (200) so that the inner case (120) is inserted thereinto, comprises a plurality of main hook parts (111), and
the plastic base (200) comprises fastening parts (210), so that the main hook parts (111) pass through the fastening parts (210) provided to the plastic base (200) and are forcibly hooked and fastened, and the outer case (110) comprises sub supporters (112) each formed on an inner side on the inner surface in a rectangular fin shape, having an inclination angle slightly further inward than the vertical downward direction, on a line at which the main hook parts (111) are formed.

2. The vehicle antenna of claim 1, wherein the plastic base (200) comprises:
main hook fastening parts (210), which are hook throughholes to which the plurality of main hook parts (111) formed in the inner surface of the outer case (110) are respectively fastened, and each of which is formed, on a peripheral edge portion of the plastic base (200), in a penetrating structure having a rectangular peripheral shape having a height in an upward direction;
a plurality of cylindrical case fastening parts (220) formed on the peripheral edge portion to have a diameter smaller than diameters of the fastening holes (123) of the inner case (120) so as to be inserted into the fastening holes (123) of the inner case (120) and screw coupled; a circular conductive base (400) penetration part provided on a central portion of the plastic base (200) so that a lower side of the conductive base (400) passes through a vehicle roof panel; and fastening holes (240) provided on a peripheral edge portion of the conductive base penetration part and fastened to the conductive base (400), and thus, the conductive base (400) is mounted on the fastening holes (240) and configured to be fixedly attached by screws.

3. The vehicle antenna of claim 2, wherein the plastic base (200) comprises:
a substrate mounting part (260) provided on a central portion thereof and having a height in an upward direction on an upper end part outside the conductive base penetration part;
a plurality of cylindrical fastening holes (261) provided on the periphery of the substrate mounting part (260) such that the substrate part (700), on which the antenna part (600) and
the circuit part are mounted, is configured to be mounted and fastened by
screws to be fixedly attached; a waterproof pad (300); and
a waterproof pad mounting part (270), on which the waterproof
pad (300) is mounted, provided on an outer periphery of the substrate mounting part (260), which is the peripheral edge portion, wherein the main hook fastening parts (210) and the case fastening parts (220) are formed on the waterproof pad mounting part (270).

4. The vehicle antenna of claim 3, wherein the waterproof pad (300), which is a rubber pad and is inserted into the outer peripheral portion of the substrate mounting part (260) while closely contacting the outer peripheral portion, comprises:
a substrate penetration part formed to be slightly larger than the size corresponding to the shape of the substrate mounting part (260) so as to be penetrated by the substrate part (700);
a first end part formed to have a predetermined area, on the outer periphery of the substrate penetration part formed in the central portion, so as to be mounted on the waterproof pad mounting part (270) of the plastic base (200);
a second end part formed as a downward height difference surface adjacent to the first end part outside the first end part; and
an inclined lid part formed to be inclined as an outermost periphery outside the second end part.

5. The vehicle antenna of claim 4, wherein the waterproof pad (300) comprises:
a plurality of main hook through holes which are provided on an upper surface of the first end part, to which a lower surface end portion of the case edge part of the inner case (120) is in close contact and tightly attached, and through which the main hook parts (111) of the outer case (110) pass through; and
a plurality of through holes inserted into the cylindrical case fastening parts (220) of the plastic base (200), and the lower surface end portion of the case edge part, provided to the outer case (110) which covers the outer portion of the inner case (120), closely contacts and is mounted on an upper surface the second end part of the waterproof pad (300).

6. The vehicle antenna of claim 5, wherein the inner case (120) comprises: main hook guide parts provided on the lower outer peripheral edge portion thereof and configured to guide the main hook parts (111) formed in the outer case (110);
sub supporter insertion parts provided between the main hook guide parts and configured to support the sub supporters (112) provided to the outer case (110) so that the sub supporters (112) are inserted therein and supported thereby; and
a case edge part which is a lower peripheral end surface of the inner case (120) and is provided so as to closely contact an upper surface of the waterproof pad (300) which surrounds the periphery of the plastic base (200) and maintains a close watertight structure.

7. The vehicle antenna of claim 6, wherein the conductive base (400) comprises:
a roof fastening member coupling part provided in a lower portion of the conductive base (400), protruding in a cylindrical shape, and having a threaded portion on an inner circumferential surface thereof;
fastening holes provided, on an upper flat surface portion of the conductive base (400), so as to be fastened to the plastic base (200); and stoppers for temporarily fastening the conductive base (400) to a vehicle roof panel.

8. The vehicle antenna of claim 7, further comprising a rubber sealing member (500), wherein the rubber sealing member (500) comprises:
a circular O-ring part which has a circular shape so as to be attached to surround the peripheral edge portion of the conductive base penetration part of the plastic base (200),
has a periphery of a certain diameter and thickness, and
closely contacts the bottom surface part of the plastic base (200); and
a plurality of protruding coupling parts (520) which are provided along the circumference of the O-ring part and are coupled to the plastic base (200), wherein the protruding coupling parts (520) each comprises:
an insertion part bent outward from inside in a "C"-shape so as to be inserted in the peripheral edge portion of the conductive base penetration part of the plastic base (200);
and
a plurality of protruding coupling holes which are inserted into and coupled to a plurality of fastening protruding parts formed on the peripheral edge portion of the conductive base penetration part formed on the upper surface of the plastic base (200).

9. The vehicle antenna of claim 8, wherein the upper surface of the plastic base (200) is enclosed up to the peripheral edge by the first end part, the second end part, and the inclined lid part of the waterproof pad (300), the peripheral edge portion of the conductive base penetration part of the plastic base (200) is enclosed by the sealing member (500), and while the O-ring part closely contacts and is coupled to a lower bottom surface portion, the conductive base (400) which passes through the conductive base penetration part formed in the plastic base (200) is configured to be fixedly attached to the plastic base (200) through the fastening holes by means of a coupling member.

10. A vehicle antenna according to claim 1, wherein the sub supporters (112) are inserted into sub supporter insertion holes formed in the inner case (120); and the inner case (120) comprises main hook guide parts provided on a lower outer peripheral edge portion thereof to guide the main hook parts (111) of the outer case (110); comprises sub supporter insertion parts provided between the main hook guide parts and configured to be penetrated by the sub supporters (112) and support the sub supporters (112); and comprises fastening holes provided in a lower peripheral edge portion thereof and inserted to the fastening holes formed in the plastic base (200) so as to be configured to be thereby fixedly fastened to the plastic base (200) by means of screws.

11. The vehicle antenna of claim 10, wherein the plastic base (200) comprises:
main hook fastening parts (210), which are hooking through holes to which the main hook parts (111) are fastened corresponding to the plurality of main hook parts (111) formed in the inner surface of the outer case (110), and each of which is formed, on a peripheral edge portion of the plastic base (200), in a penetrating structure having a rectangular peripheral shape having a height in an upward direction;
a plurality of cylindrical case fastening parts (220) formed on the peripheral edge portion to have a diameter smaller than diameters of the fastening holes of the inner case (120) so as to be inserted into the fastening holes of the inner case (120) and screw coupled;
a circular conductive base penetration part provided on a central portion of the plastic base (200) so that a lower side of the conductive base (400) passes through a vehicle roof panel; and
fastening holes provided on a peripheral edge portion of the conductive base penetration part and fastened to the conductive base (400), and thus, the conductive base (400) is configured to be mounted on the fastening holes and fixedly attached by screws.

12. The vehicle antenna of claim 11, wherein the plastic base (200) comprises:
a substrate mounting part (260) provided on a central portion thereof and having a height in an upward direction on an upper end portion outside the conductive base penetration part;
a plurality of cylindrical fastening holes provided on the periphery of the substrate mounting part (260) such that the substrate part (700), on which the antenna part (600) and the circuit part are mounted, is configured to be mounted and fastened to the
fastening holes by screws to be fixedly attached; a waterproof pad (300); and a
waterproof pad mounting part (270), on which the waterproof pad (300) is mounted, provided on an outer periphery of the substrate mounting part, which is the peripheral edge portion, wherein the main hook fastening parts (210) and the case fastening parts (220) are formed on the waterproof pad mounting part (270).

13. The vehicle antenna of claim 12, wherein the waterproof pad (300), which is a rubber pad and is inserted into the outer peripheral portion of the substrate mounting part (260) while closely contacting the outer peripheral portion, comprises:
a substrate penetration part formed to be slightly larger than the size corresponding to the shape of the substrate mounting part (260) so as to be penetrated by the substrate part (700) ;
a first end part formed to have a predetermined area, on the outer periphery of the substrate penetration part formed in the central portion, so as to be mounted on the waterproof pad mounting part (270) of the plastic base (200);
a second end part formed as a downward height difference surface adjacent to the first end portion outside the first end part; and
an inclined lid part formed to be inclined as an outermost periphery outside the second end part.

14. The vehicle antenna of claim 13, wherein the waterproof pad (300) comprises:
a plurality of main hook through holes which are provided on an upper surface of the first end part, to which a lower surface end portion of the case edge part of the inner case (120) is tightly attached, and through which the main hook parts (111) of the outer case (110) pass through; and
a plurality of through holes inserted into the cylindrical case fastening parts (220) of the plastic base (200), and the lower surface end portion of the case edge part, provided to the outer case (110) which covers the outer portion of the inner case (120), closely contacts and is mounted on an upper surface the second end part of the waterproof pad (300).

15. The vehicle antenna of claim 14, wherein the plastic base (200) and the inner case (120) are configured to be fastened by screws and
fixedly coupled in a state in which: the substrate part (700) is mounted on the substrate mounting part (260) of the plastic base (200); the waterproof pad (300) is mounted on the waterproof pad mounting part (270) of the plastic base (200) and surrounds a periphery of the plastic base (200); the lower surface end portion of the case edge part of the inner case (120) of the antenna case (100) closely contacts and is mounted on the upper surface of the first end part formed on the waterproof pad (300); the fastening holes provided in the inner case (120) are externally inserted to the outer portions of the cylindrical case fastening parts (220) of the plastic base (200); and
the case edge part, which is the lower surface end portion, is mounted on the upper surface of the waterproof pad (300) inserted into the case fastening part, and the outer portion of the inner case (120) fixedly attached to the plastic base (200) is inserted such that:
the lower surface end portion of the case edge part of the outer case (110) closely contacts and is mounted on the second end part formed on the waterproof pad (300) which covers the outer periphery of the plastic base (200); the plurality of main hook parts (111) provided in the inner surface of the outer case (110) are guided downward along the main hook guide parts provided to the inner case (120), pass through the main hook through holes provided to the waterproof pad (300), and
pass through the main hook fastening parts (210) provided to the plastic base (200) and forcibly hooked and fastened; and
the sub supporters (112) provided to the outer case (110) are forcibly fitted to the sub supporter insertion hole parts provided in the inner case (120).

16. The vehicle antenna of claim 15, wherein the conductive base (400) comprises:
a roof fastening member coupling part provided in a lower portion thereof, protruding in a cylindrical shape, and having a threaded portion on an inner circumferential surface thereof;
fastening holes provided, on an upper flat surface portion thereof, so as to be fastened to the plastic base (200); and
stoppers for temporarily fastening the conductive base to a vehicle roof panel.

17. The vehicle antenna of claim 16, further comprising a rubber sealing member (500), wherein the rubber sealing member (500) comprises:
a circular O-ring part which has a circular shape so as to be attached to surround the peripheral edge portion of the conductive base penetration part of the plastic base (200), has a periphery of a certain diameter and thickness, and
closely contacts the bottom surface part of the plastic base (200); and
a plurality of protruding coupling parts (520) which are provided along the circumference of the O-ring part and are coupled to the plastic base (200), wherein the protruding coupling parts (520) each comprises: an insertion part bent outward from inside in a "C"-shape so as to be inserted in the peripheral edge portion of the conductive base penetration part of the plastic base (200); and a plurality of protruding coupling holes which are inserted into and coupled to a plurality of fastening protruding parts formed on the peripheral edge portion of the conductive base penetration part formed on the upper surface of the plastic base (200).

18. The vehicle antenna of claim 17, wherein the upper surface of the plastic base (200) is enclosed up to the peripheral edge by the first end part, the second end part, and the inclined lid part of the waterproof pad (300), the peripheral edge portion of the conductive base penetration part of the plastic base (200) is enclosed by the sealing member (500), and while the O-ring part closely contacts and is coupled to a lower bottom surface portion, the conductive base (400) which passes through the conductive base penetration part formed in the plastic base (200) is configured to be fixedly attached to the plastic base (200) through the fastening holes by means of a coupling member.

## Patentansprüche

1. Fahrzeugantenne, umfassend ein Antennengehäuse (100), eine leitende Basis (400), einen Antennenteil (600), eine Kunststoffbasis (200), ein Substratteil (700) und einen Schaltungsteil;
wobei das Antennengehäuse konfiguriert ist, um in einem Innenraum des Antennengehäuses (100), das in einer stromlinienförmigen Kuppelform ausgebildet ist, die leitende Basis (400), den Antennenteil (600), der auf der Kunststoffbasis (200) montiert ist, und das Substratteil (700), an dem ein Schaltungsteil angebracht ist, unterzubringen, wobei:
das Antennengehäuse (100) ein äußeres Gehäuse (110) und ein inneres Gehäuse (120) umfasst, wobei das innere Gehäuse (120) so ausgebildet ist, dass es eine geöffnete Unterseite aufweist, und ein Unterbringungsraum darin konfiguriert ist, um den Antennenteil (600) aufzunehmen, wobei der Antennenteil (600) umfasst: mehrere Strahlungselemente und das Substratteil (700), auf dem das Schaltungsteil montiert ist, Befestigungslöcher (123) in einem unteren Umfangskantenabschnitt davon aufweist und konfiguriert ist, um mittels Schrauben an der Kunststoffbasis (200) fixiert und befestigt zu werden; und
das äußere Gehäuse (110) so ausgebildet ist, dass eine untere Oberfläche in Richtung einer Fahrzeugdachverkleidungsseite geöffnet ist und ein Unterbringungsraum darin den gesamten äußeren Abschnitt des inneren Gehäuses (120) bedeckt, der fest mit der Kunststoffbasis (200) verbunden und so gekoppelt ist, dass das innere Gehäuse (120) darin eingesetzt ist, mehrere Haupthakenteile (111) umfasst, und die Kunststoffbasis (200) Befestigungsteile (210) umfasst, so dass die Haupthakenteile (111) durch die Befestigungsteile (210) gehen, die an der Kunststoffbasis (200) vorgesehen sind, und unter Kraftausübung eingehakt und befestigt werden, und das äußere Gehäuse (110) Unterträger (112) umfasst, die jeweils auf einer Innenseite auf der Innenfläche in einer rechteckigen Flossenform mit einem Neigungswinkel etwas weiter nach innen als die vertikale Abwärtsrichtung auf einer Linie ausgebildet sind, an der die Haupthakenteile (111) ausgebildet sind.

2. Fahrzeugantenne nach Anspruch 1, wobei die Kunststoffbasis (200) umfasst:
Haupthaken-Befestigungsteile (210), die Hakendurchgangslöcher sind, an denen die mehreren Haupthaken-Teile (111), die in der Innenfläche des äußeren Gehäuses (110) ausgebildet sind, jeweils an einer Umfangskante befestigt sind und von denen jedes an einem Umfangskantenabschnitt der Kunststoffbasis (200) in einer durchdringenden Struktur mit einer rechteckigen Umfangsform mit einer Höhe nach oben ausgebildet ist;
mehrere zylindrische Gehäuse-Befestigungsteile (220), die an dem Umfangskantenabschnitt ausgebildet sind, um einen Durchmesser zu haben, der kleiner als die Durchmesser der Befestigungslöcher (123) des inneren Gehäuses (120) ist, so dass sie in die Befestigungslöcher (123) des inneren Gehäuses (120) eingeführt und verschraubt werden;
einen kreisförmigen Durchführungsteil der leitenden Basis (400), der an einem zentralen Abschnitt der Kunststoffbasis (200) vorgesehen ist, so dass eine Unterseite der leitenden Basis (400) durch eine Fahrzeugdachplatte verläuft; und
Befestigungslöcher (240), die an einem Umfangskantenabschnitt des Durchdringungsteils der leitenden Basis vorgesehen und an der leitenden Basis (400) befestigt sind, und somit die leitende Basis (400) an den Befestigungslöchern (240) montiert und so konfiguriert sind, dass sie fest durch Schrauben befestigt sind.

3. Fahrzeugantenne nach Anspruch 2, wobei die Kunststoffbasis (200) umfasst:
ein Substrat-Montageteil (260), das an einem zentralen Abschnitt davon vorgesehen ist und eine Höhe in Aufwärtsrichtung an einem oberen Endteil außerhalb des leitenden Basispenetrationsteils aufweist;
eine Vielzahl von zylindrischen Befestigungslöchern (261), die am Umfang des Substrat-Montageteils (260) vorgesehen sind, so dass das Substratteil (700), an dem der Antennenteil (600) und der Schaltungsteil montiert sind, zum Montieren konfiguriert und durch fest zu befestigende Schrauben befestigt ist;
ein wasserdichtes Pad (300); und
ein wasserdichtes Pad-Montageteil (270), auf dem das wasserdichte Pad (300), vorgesehen und an einem Außenumfang des Substrat-Montageteils (260), der der periphere Randabschnitt ist, montiert ist, wobei die Haupthaken-Befestigungsteile (210) und die Gehäuse-Befestigungsteile (220) an dem wasserdichten Pad-Montageteil (270) ausgebildet sind.

4. Fahrzeugantenne nach Anspruch 3, wobei das wasserdichte Pad (300), welches ein Gummipolster ist und in den äußeren Umfangsabschnitt des Substrat-Montageteils (260) eingeführt wird, während es den äußeren Umfangsabschnitt engberührt, umfasst:
einen Substratpenetrationsteil, der so geformt ist, dass er etwas größer als die Größe ist, die der Form des Substrat-Montageteils (260) entspricht, um von dem Substratteil (700) durchdrungen zu werden;
ein erstes Endteil, das so ausgebildet ist, dass es einen vorbestimmten Bereich an dem Außenumfang des Substratpenetrationsteils aufweist, das in dem Mittelabschnitt ausgebildet ist, um auf dem wasserdichten Pad-Montageteil (270) der Kunststoffbasis (200) ein zweites Endteil, das als nach unten gerichtete Höhenunterschiedsfläche neben dem ersten Endteil außerhalb des ersten Endteils ausgebildet ist, zu montieren; und
einen geneigten Deckelteil, der so geformt ist, dass er als äußerster Umfang außerhalb des zweiten Endteils geneigt ist.

5. Fahrzeugantenne nach Anspruch 4, wobei das wasserdichte Pad (300) umfasst:
mehrere Haupthaken-Durchgangslöcher, die an einer oberen Oberfläche des ersten Endteils vorgesehen sind, an denen ein unterer Oberflächenendabschnitt des Gehäusekantenabschnitts des inneren Gehäuses (120) in engem Kontakt und fest angebracht ist, und durch die die Haupthakenteile (111) des äußeren Gehäuses (110) durchgehen; und
eine Vielzahl von Durchgangslöchern, die in die zylindrischen Gehäuse-Befestigungsteile (220) der Kunststoffbasis (200) und den unteren Oberflächenendabschnitt des Gehäusekantenteils eingesetzt sind, für das äußere Gehäuse (110), das den äußeren Abschnitt des inneren Gehäuses (120) den zweiten Endteil des wasserdichten Pads (300) engberührt und auf einer Oberseite montiert ist, vorgesehen sind.

6. Fahrzeugantenne nach Anspruch 5, wobei das innere Gehäuse (120) umfasst:
Haupthakenführungsteile, die an dem unteren äußeren Umfangskantenabschnitt davon vorgesehen und konfiguriert sind, um die Haupthakenteile (111) zu führen, die in das äußere Gehäuse (110) ausgebildeten Unterhalter-Einsteckteilen ausgebildet sind, die zwischen den Haupthakenführungsteilen vorgesehen und konfiguriert sind, um die Unterträger (112), die für das äußere Gehäuse (110) vorgesehen sind, zu tragen; und
einen Gehäusekantenteil, der eine untere periphere Endfläche des inneren Gehäuses (120) ist und so vorgesehen ist, dass er eine obere Oberfläche des wasserdichten Pads (300), die den Umfang der Kunststoffbasis (200) umgibt und eine enge wasserdichte Struktur beibehält, engberührt.

7. Fahrzeugantenne nach Anspruch 6, wobei die leitende Basis (400) umfasst:
ein Dachbefestigungselement-Kupplungsteil, das in einem unteren Abschnitt der leitenden Basis (400) vorgesehen ist, in einer zylindrischen Form hervorsteht und einen Gewindeabschnitt auf einer inneren Umfangsfläche davon aufweist;
Befestigungslöcher, die an einem oberen flachen Oberflächenabschnitt der leitenden Basis (400) vorgesehen sind, um an der Kunststoffbasis (200) befestigt zu werden; und
Anschläge, die zum vorübergehenden Befestigen der leitenden Basis (400) an einer Fahrzeugdachplatte dienen.

8. Fahrzeugantenne nach Anspruch 7, ferner umfassend ein Gummidichtungselement (500), wobei das Gummidichtungselement (500) umfasst:
einen kreisförmigen O-Ring-Teil, der eine kreisförmige Form aufweist, um so angebracht zu werden, dass er den Umfangskantenabschnitt des Durchdringungsteils der leitenden Basis der Kunststoffbasis (200) umgibt, einen Umfang eines bestimmten Durchmessers und eine bestimmte Dicke aufweist und den Bodenoberflächenteil der Kunststoffbasis (200) engberührt; und
mehrere vorstehende Kupplungsteile (520), die entlang des Umfangs des O-Ring-Teils vorgesehen und mit der Kunststoffbasis (200) gekoppelt sind, wobei die hervorstehenden Kupplungsteile (520) jeweils umfassen:
einen von innen in einer "C"-Form nach außen gebogenen Einführungsteil, um in den Umfangskantenabschnitt des Durchdringungsteils der leitenden Basis der Kunststoffbasis (200) eingeführt zu werden, und mehrere hervorstehende Kopplungslöcher, die in und gekoppelt zu einer Vielzahl von Befestigungsvorsprüngen eingeführt werden, die an dem Umfangskantenabschnitt des leitenden Basispenetrationsteils, der an der Oberseite der Kunststoffbasis (200) ausgebildet ist, geformt sind.

9. Fahrzeugantenne nach Anspruch 8,
wobei die obere Oberfläche der Kunststoffbasis (200) bis zur Umfangskante von dem ersten Endteil, dem zweiten Endteil und dem geneigten Deckelteil des wasserdichten Pads (300), dem Umfangskantenabschnitt der leitenden Basis, umschlossen ist, wobei der Durchdringungsteil der Kunststoffbasis (200) von dem Dichtungselement (500) umschlossen ist, und während der O-Ring-Teil eng mit einem unteren Bodenoberflächenabschnitt in Kontakt steht und mit diesem verbunden ist, wobei die leitende Basis (400), die durch das in der Kunststoffbasis (200) ausgebildete Durchdringungsteil der leitenden Basis verläuft, so konfiguriert ist, dass sie mittels eines Befestigungselements durch die Befestigungslöcher fest mit der Kunststoffbasis (200) verbunden ist.

10. Fahrzeugantenne nach Anspruch 1, wobei die Unterträger (112) in Unterträger-Einführlöcher, die in dem inneren Gehäuse (120) ausgebildet sind, eingesetzt sind; und
das innere Gehäuse (120) Haupthakenführungsteile umfasst, die an einem unteren äußeren Umfangskantenabschnitt davon vorgesehen sind, um die Haupthakenteile (111) des äußeren Gehäuses (110) zu führen;
Einfügeteile für Träger umfasst, die zwischen den Haupthakenführungsteilen vorgesehen sind und so konfiguriert sind, dass sie von den Unterträgern (112) durchdrungen werden und die Unterträger (112) tragen; und
Befestigungslöcher umfasst, die in einem unteren Umfangskantenabschnitt davon vorgesehen und in die Befestigungslöcher eingesetzt sind, die in der Kunststoffbasis (200) ausgebildet sind, um so konfiguriert zu sein, dass sie dadurch mittels Schrauben fest an der Kunststoffbasis (200) befestigt werden.

11. Fahrzeugantenne nach Anspruch 10, wobei die Kunststoffbasis (200) umfasst:
Haupthaken-Befestigungsteile (210), die durch Löcher einhaken, an denen die Haupthaken-Teile (111) entsprechend der Vielzahl von Haupthaken-Teilen (111), die in der Innenfläche des äußeren Gehäuses (110) ausgebildet sind, befestigt sind und jeweils davon an einem Umfangskantenabschnitt der Kunststoffbasis (200) in einer durchdringenden Struktur mit einer rechteckigen Umfangsform mit einer Höhe nach oben ausgebildet ist;
mehrere zylindrische Gehäuse-Befestigungsteile (220), die an dem Umfangskantenabschnitt ausgebildet sind, um einen Durchmesser zu haben, der kleiner als die Durchmesser der Befestigungslöcher des inneren Gehäuses (120) ist, um in die Befestigungslöcher des inneren Gehäuses (120) eingeführt und schraubengekoppelt zu werden;
einen kreisförmigen Durchführungsabschnitt für die leitende Basis, der an einem zentralen Abschnitt der Kunststoffbasis (200) vorgesehen ist, so dass eine Unterseite der leitenden Basis (400) durch eine Fahrzeugdachplatte verläuft; und
Befestigungslöcher, die an einem Umfangskantenabschnitt des Durchdringungsteils der leitenden Basis vorgesehen und an der leitenden Basis (400) befestigt sind, und damit die leitende Basis (400) konfiguriert ist, um an den Befestigungslöchern montiert und mit Schrauben befestigt zu werden.

12. Fahrzeugantenne nach Anspruch 11, wobei die Kunststoffbasis (200) umfasst:
ein Substrat-Montageteil (260), das an einem zentralen Abschnitt davon vorgesehen ist und eine Höhe in Aufwärtsrichtung an einem oberen Endabschnitt außerhalb des leitenden Basispenetrationsteils aufweist;
eine Vielzahl von zylindrischen Befestigungslöchern, die am Umfang des Substrat-Montageteils (260) vorgesehen sind, so dass das Substratteil (700), an dem der Antennenteil (600) und der Schaltungsteil montiert sind, so konfiguriert ist, dass sie mit fest zu befestigenden Schrauben an den Befestigungslöchern montiert und befestigt werden kann; ein wasserdichtes Pad (300); und
ein wasserdichtes Pad-Montageteil (270), auf dem das wasserdichte Pad (300), das an einem Außenumfang des Substrat-Montageteils, der der Umfangskantenabschnitt ist, vorgesehen ist, montiert ist, wobei die Haupthaken-Befestigungsteile (210) und die Gehäuse-Befestigungsteile (220) am wasserdichten Pad-Montageteil (270) ausgebildet sind.

13. Fahrzeugantenne nach Anspruch 12, wobei das wasserdichte Pad (300), das ein Gummipolster ist und in den äußeren Umfangsabschnitt des Substratmontageteils (260), während es den äußeren Umfangsabschnitt engberührt, eingeführt wird, umfasst:
einen Substratpenetrationsteil, der so geformt ist, dass er etwas größer als die Größe ist, die der Form des Substrat-Montageteils (260) entspricht, um von dem Substratteil (700) durchdrungen zu werden;
einen ersten Endteil, der so ausgebildet ist, dass er einen vorbestimmten Bereich am Außenumfang des Substratpenetrationsteils, der im Mittelabschnitt ausgebildet ist, um auf dem wasserdichten Pad-Montageteil (270) der Kunststoffbasis (200) montiert zu werden, aufweist;
einen zweiten Endteil, der als eine nach unten gerichtete Höhenunterschiedsfläche neben dem ersten Endabschnitt außerhalb des ersten Endteils ausgebildet ist; und
einen geneigten Deckelteil, der so geformt ist, dass er als äußerster Umfang außerhalb des zweiten Endteils geneigt ist.

14. Fahrzeugantenne nach Anspruch 13, wobei das wasserdichte Pad (300) umfasst:
mehrere Haupthaken-Durchgangslöcher, die an einer oberen Oberfläche des ersten Endteils, an welche ein unterer Oberflächenendabschnitt des Gehäusekantenteils des inneren Gehäuses (120) fest angebracht ist und durch die die Haupthakenteile (111) des äußeren Gehäuses (110) durchlaufen, vorgesehen sind; und
eine Vielzahl von Durchgangslöchern, die in die zylindrischen Gehäuse-Befestigungsteile (220) der Kunststoffbasis (200) eingesetzt sind, wobei der untere Oberflächenendabschnitt des Gehäusekantenabschnitts, der für das äußere Gehäuse (110), das den äußeren Abschnitt des inneren Gehäuses (120) bedeckt, vorgesehen ist, den zweiten Endteil des wasserdichten Pads (300) engberührt und auf einer oberen Oberfläche montiert ist.

15. Fahrzeugantenne nach Anspruch 14, wobei die Kunststoffbasis (200) und das innere Gehäuse (120) so konfiguriert sind, dass sie mit Schrauben befestigt und in einem Zustand fest gekoppelt sind, in welchem:
das Substratteil (700) auf dem Substrat-Montageteil (260) der Kunststoffbasis (200) montiert ist;
das wasserdichte Pad (300) auf dem wasserdichten Pad-Montageteil (270) der Kunststoffbasis (200) montiert ist und einen Umfang der Kunststoffbasis (200) umgibt;
der untere Oberflächenendabschnitt des Gehäusekantenteils des inneren Gehäuses (120) des Antennengehäuses (100) engberührt und an der oberen Oberfläche des ersten Endteils, das auf dem wasserdichten Pad (300) ausgebildet ist, angebracht ist; die im inneren Gehäuse (120) vorgesehenen Befestigungslöcher außen in die äußeren Abschnitte der Befestigungsteile (220) des zylindrischen Gehäuses des Kunststoffbodens (200) eingesetzt sind; und
der Gehäusekantenteil, der der untere Oberflächenendabschnitt ist, an der oberen Oberfläche des wasserdichten Pads (300), das in das Gehäusebefestigungsteil eingesetzt ist, angebracht ist und der äußere Abschnitt des inneren Gehäuses (120) fest an der Kunststoffbasis (200) befestigt wird und so eingefügt ist, dass:
der untere Oberflächenendabschnitt des Gehäusekantenteils des äußeren Gehäuses (110) engberührt und an dem zweiten Endteil, das auf dem wasserdichten Pad (300), das den Außenumfang der Kunststoffbasis (200) bedeckt, ausgebildet ist, angebracht ist;
die mehreren Haupthakenteile (111), die in der Innenfläche des äußeren Gehäuses (110) vorgesehen sind, entlang der Haupthakenführungsteile, die für das innere Gehäuse (120) vorgesehen sind, nach unten geführt und durch den Haupthaken durch Löcher geführt werden, die für das wasserdichte Gehäuse vorgesehen Pads (300) sind und durch die Haupthaken-Befestigungsteile (210), die an der Kunststoffbasis (200) vorgesehen und unter Ausübung einer Kraft eingehakt und befestigt sind, führen; und
die am äußeren Gehäuse (110) vorgesehenen Hilfsstützen (112) unter Ausübung einer Kraft an den im inneren Gehäuse (120) vorgesehenen Teilen des Einstecklochs des Unterträgers angebracht sind.

16. Fahrzeugantenne nach Anspruch 15, wobei die leitende Basis (400) umfasst:
ein Dachbefestigungselement-Kupplungsteil, das in einem unteren Abschnitt davon vorgesehen ist, in einer zylindrischen Form hervorsteht und einen Gewindeabschnitt auf einer inneren Umfangsfläche davon aufweist;
Befestigungslöcher, die an einem oberen flachen Oberflächenabschnitt davon vorgesehen sind, um an der Kunststoffbasis (200) befestigt zu werden; und
Stopper zur vorübergehenden Befestigung der leitenden Basis an einer Fahrzeugdachplatte.

17. Fahrzeugantenne nach Anspruch 16, ferner umfassend ein Gummidichtungselement (500), wobei das Gummidichtungselement (500) umfasst:
einen kreisförmigen O-Ring-Teil, der eine kreisförmige Form aufweist, um so angebracht zu werden, dass er den Umfangskantenabschnitt des Durchdringungsteils der leitenden Basis der Kunststoffbasis (200) umgibt, einen Umfang eines bestimmten Durchmessers und einer bestimmten Dicke aufweist, und den Boden-Oberflächenteil der Kunststoffbasis (200) engberührt; und
mehrere vorstehende Kupplungsteile (520), die entlang des Umfangs des O-Ring-Teils vorgesehen und mit der Kunststoffbasis (200) gekoppelt sind;
wobei die hervorstehenden Kupplungsteile (520) jeweils umfassen:
einen von innen nach außen gebogenen Einführungsteil in einer "C"-Form, um in den Umfangskantenabschnitt des leitenden Basisdurchdringungsteils der Kunststoffbasis (200) eingeführt zu werden; und
mehrere vorstehende Kopplungslöcher, die in mehrere vorstehende Befestigungsteile eingeführt und mit diesen gekoppelt sind, die an dem Umfangskantenabschnitt des leitenden Basispenetrationsteils, der an der oberen Oberfläche der Kunststoffbasis (200) ausgebildet ist, geformt sind.

18. Fahrzeugantenne nach Anspruch 17, wobei die Oberseite der Kunststoffbasis (200) bis zur Umfangskante von dem ersten Endteil, dem zweiten Endteil und dem geneigten Deckelteil des wasserdichten Pads (300) umschlossen ist, wobei der Umfangskantenabschnitt des leitenden Basisdurchdringungsteils der Kunststoffbasis (200) von dem Dichtungselement (500) umschlossen ist und während der O-Ringteil eng mit einem unteren Bodenoberflächenabschnitt in Kontakt steht und mit diesem verbunden ist, wobei die leitende Basis (400), die durch den in der Kunststoffbasis (200) ausgebildeten leitenden Basispenetrationsteil verläuft, so konfiguriert ist, dass sie mittels eines Befestigungselements durch die Befestigungslöcher fest an der Kunststoffbasis (200) befestigt ist.

## Revendications

1. Antenne de véhicule comprenant un boîtier (100), une base conductrice (400), une partie d'antenne (600), une base en plastique (200), une partie de substrat (700), et une partie de circuit ;
dans laquelle le boîtier d'antenne est configuré pour loger, dans un espace interne du boîtier d'antenne (100) formé en forme de dôme fuselé, la base conductrice (400), la partie d'antenne (600) montée sur la base en plastique (200), et la partie de substrat (700) sur laquelle une partie de circuit est attachée, dans laquelle :
le boîtier d'antenne (100) comprend un boîtier externe (110) et un boîtier interne (120) ;
le boîtier interne (120) est formé pour avoir une surface inférieure ouverte et un espace de logement à l'intérieur de celui-ci, est configuré pour loger la partie d'antenne (600) comprenant une pluralité d'éléments de rayonnement et la partie de substrat (700) sur laquelle la partie de circuit est montée, a des orifices de fixation (123) dans une portion de bord périphérique inférieure de celui-ci, et est ainsi configuré pour être attaché et fixé à la base en plastique (200) à l'aide de vis; et
le boîtier externe (110) est formé pour avoir une surface inférieure ouverte vers un côté de panneau de toit de véhicule et un espace de logement à l'intérieur de celui-ci, recouvre toute la portion externe du boîtier interne (120) fixée et couplée solidement à la base en plastique (200) de sorte que le boîtier interne (120) est inséré à l'intérieur de celui-ci, comprend une pluralité de parties de crochets principaux (111), et la base en plastique (200) comprend des parties de fixation (210), de sorte que les parties de crochets principaux (111) passent à travers les parties de fixation (210) fournies à la base en plastique (200) et sont accrochées et fixées de force, et le boîtier externe (110) comprend des sous-supports (112) chacun formé sur un côté interne de la surface interne en forme d'ailette rectangulaire, ayant un angle d'inclinaison légèrement plus à l'intérieur que la direction verticale vers le bas, sur une ligne en correspondance de laquelle les parties de crochets principaux (111) sont formées.

2. Antenne de véhicule de la revendication 1, dans laquelle la base en plastique (200) comprend :
des parties de fixation de crochets principaux (210), qui sont des orifices traversants pour crochets auxquels la pluralité de parties de crochets principaux (111) formées dans la surface interne du boîtier externe (110) sont respectivement fixées, et chacune desquelles est formée, sur une portion de bord périphérique de la base en plastique (200), dans une structure de pénétration ayant une forme périphérique rectangulaire ayant une hauteur dans une direction vers le haut ;
une pluralité de parties cylindriques de fixation du boîtier (220) formées sur la portion de bord périphérique pour avoir un diamètre inférieur aux diamètres des orifices de fixation (123) du boîtier interne (120) de façon à être insérées dans les orifices de fixation (123) du boîtier interne (120) et couplées par des vis; une partie circulaire de pénétration de base conductrice (400) fournie sur une portion centrale de la base en plastique (200) de sorte qu'un côté inférieur de la base conductrice (400) passe à travers un panneau de toit de véhicule ; et des orifices de fixation (240) fournis sur une portion de bord périphérique de la partie de pénétration de base conductrice et fixés à la base conductrice (400), et ainsi, la base conductrice (400) est montée sur les orifices de fixation (240) et configurée pour être attachée solidement par des vis.

3. Antenne de véhicule de la revendication 2, dans laquelle la base en plastique (200) comprend :
une partie de montage de substrat (260) fournie sur une portion centrale de celle-ci et ayant une hauteur dans une direction vers le haut sur une partie d'extrémité supérieure à l'extérieur de la partie de pénétration de base conductrice ;
une pluralité d'orifices de fixation cylindriques (261) fournis sur la périphérie de la partie de montage de substrat (260) de sorte que la partie de substrat (700), sur laquelle la partie d'antenne (600) et la partie de circuit sont montées, est configurée pour être montée et fixée par des vis afin d'être attachée solidement ;
un tampon étanche à l'eau (300) ; et
une partie de montage de tampon étanche à l'eau (270), sur laquelle le tampon étanche à l'eau (300) est monté, fournie sur une périphérie externe de la partie de montage de substrat (260), qui est la portion de bord périphérique, dans laquelle les parties de fixation de crochets principaux (210) et les parties de fixation de boîtier (220) sont formées sur la partie de montage de tampon étanche à l'eau (270).

4. Antenne de véhicule de la revendication 3, dans laquelle le tampon étanche à l'eau (300), qui est un tampon en caoutchouc et est inséré dans une portion périphérique externe de la partie de montage de substrat (260) tout en étant en contact étroit avec la portion périphérique externe, comprend :
une partie de pénétration de substrat formée pour être légèrement supérieure à la taille correspondant à la forme de la partie de montage de substrat (260) de façon à être pénétrée par la partie de substrat (700) ;
une première partie d'extrémité formée pour avoir une aire prédéterminée, sur la périphérie externe de la partie de pénétration de substrat formée dans la portion centrale, de façon à être montée sur la partie de montage de tampon étanche à l'eau (270) de la base en plastique (200) ;
une deuxième partie d'extrémité formée comme une surface de différence de hauteur vers le bas adjacente à la première partie d'extrémité à l'extérieur de la première partie d'extrémité ; et
une partie de couvercle inclinée formée pour être inclinée comme une périphérie la plus externe de la deuxième partie d'extrémité.

5. Antenne de véhicule de la revendication 4, dans laquelle le tampon étanche à l'eau (300) comprend :
une pluralité d'orifices traversants pour crochets principaux qui sont fournis sur une surface supérieure de la première partie d'extrémité, avec lesquels une portion d'extrémité de surface inférieure de la partie de bord de boîtier du boîtier interne (120) est en contact étroit et étroitement attachée, et à travers lesquels les parties de crochets principaux (111) du boîtier externe (110) passent à travers ; et
une pluralité d'orifices traversants insérés dans les parties cylindriques de fixation de boîtier (220) de la base en plastique (200), et la portion d'extrémité de surface inférieure de la partie de bord de boîtier, fournie au boîtier externe (110) qui recouvre la portion externe du boîtier interne (120), entre en contact étroit et est montée sur une surface supérieure la deuxième partie d'extrémité du tampon étanche à l'eau (300).

6. Antenne de véhicule de la revendication 5, dans laquelle le boîtier interne (120) comprend : des parties de guidage de crochets principaux fournies sur la portion de bord périphérique externe inférieur de celui-ci et configurées pour guider les parties de crochets principaux (111) formées dans le boîtier externe (110) ;
des parties d'insertion de sous-supports fournies entre les parties de guidage de crochets principaux et configurées pour supporter les sous-supports (112) fournis au boîtier externe (110) de sorte que les sous-supports (112) sont insérés dans celles-ci et supportés par celles-ci ; et
une partie de bord de boîtier qui est une surface d'extrémité périphérique inférieure du boîtier interne (120) et est fournie de façon à entrer en contact étroit avec une surface supérieure du tampon étanche à l'eau (300) qui entoure la périphérie de la base en plastique (200) et maintient une structure étanche proche.

7. Antenne de véhicule de la revendication 6, dans laquelle la base conductrice (400) comprend :
une partie de couplage d'organe de fixation de toit fournie dans une portion inférieure de la base conductrice (400), faisant saillie en forme cylindrique, et ayant une portion filetée sur une surface circonférentielle interne de celle-ci ;
des orifices de fixation fournis, sur une portion de surface plane supérieure de la base conductrice (400), de façon à être fixés à la base en plastique (200) ; et des butées pour fixer temporairement la base conductrice (400) à un panneau de toit de véhicule.

8. Antenne de véhicule de la revendication 7, comprenant en outre un organe d'étanchéité en caoutchouc (500), dans laquelle l'organe d'étanchéité en caoutchouc (500) comprend :
une partie de O-ring circulaire qui a une forme circulaire de façon à être attachée pour entourer la portion de bord périphérique de la partie de pénétration de base conductrice de la base en plastique (200), a une périphérie d'un certain diamètre et épaisseur, et entre en contact étroit avec la partie de surface de fond de la base en plastique (200) ; et
une pluralité de parties de couplage en saillie (520) qui sont fournies le long de la circonférence de la partie de O-ring et sont couplées à la base en plastique (200), dans laquelle les parties de couplage en saillie (520) comprennent chacune :
une partie d'insertion courbée vers l'extérieur depuis l'intérieur en forme de « C » de façon à être insérée dans la portion de bord périphérique de la partie de pénétration de base conductrice de la base en plastique (200) ; et
une pluralité d'orifices de couplage en saillie qui sont insérés dans et couplés à une pluralité de parties de fixation en saillie formées sur la portion de bord périphérique de la partie de pénétration de base conductrice formée sur la surface supérieure de la base en plastique (200).

9. Antenne de véhicule de la revendication 8, dans laquelle la surface supérieure de la base en plastique (200) est renfermée jusqu'au bord périphérique par la première partie d'extrémité, la deuxième partie d'extrémité, et la partie de couvercle inclinée du tampon étanche à l'eau (300), la portion de bord périphérique de la partie de pénétration de base conductrice de la base en plastique (200) est renfermée par l'organe d'étanchéité (500), et alors que la partie de O-ring entre en contact étroit et est couplée à une portion de surface de fond inférieure, la base conductrice (400) qui passe à travers la partie de pénétration de base conductrice formée dans la base en plastique (200) est configurée pour être attachée solidement à la base en plastique (200) à travers les orifices de fixation au moyen d'un organe de couplage.

10. Antenne de véhicule selon la revendication 1, dans laquelle les sous-supports (112) sont insérés dans des orifices d'insertion de sous-supports formés dans le boîtier interne (120) ; et le boîtier interne (120) comprend des parties de guidage de crochets principaux fournies sur une portion de bord périphérique externe inférieur de celui-ci pour guider les parties de crochets principaux (111) du boîtier externe (110) ; comprend des parties d'insertion de sous-supports fournies entre les parties de guidage de crochets principaux et configurées pour être pénétrées par les sous-supports (112) et supporter les sous-supports (112) ; et comprend des orifices de fixation formés dans la base en plastique (200) de façon à être configurés pour être ainsi fixés solidement à la base en plastique (200) à l'aide de vis.

11. Antenne de véhicule de la revendication 10, dans laquelle la base en plastique (200) comprend :
des parties de fixation de crochets principaux (210), qui sont des orifices traversants d'accrochage auxquels les parties de crochets principaux (111) sont fixées correspondant à la pluralité de parties de crochets principaux (111) formées dans la surface interne du boîtier externe (110), et chacune desquelles est formée, sur une portion de bord périphérique de la base en plastique (200), dans une structure de pénétration ayant une forme périphérique rectangulaire ayant une hauteur dans une direction vers le haut ;
une pluralité de parties cylindriques de fixation de boîtier (220) formées sur la portion de bord périphérique pour avoir un diamètre inférieur aux diamètres des orifices de fixation du boîtier interne (120) de façon à être insérées dans les orifices de fixation du boîtier interne (120) et couplées par des vis ;
une partie circulaire de pénétration de base conductrice fournie sur une portion centrale de la base en plastique (200) de façon qu'un côté inférieur de la base conductrice (400) passe à travers un panneau de toit de véhicule ; et
des orifices de fixation fournis sur une portion de bord périphérique de la partie de pénétration de base conductrice et fixés à la base conductrice (400), et ainsi, la base conductrice (400) est configurée pour être montée sur les orifices de fixation et attachée solidement par des vis.

12. Antenne de véhicule de la revendication 11, dans laquelle la base en plastique (200) comprend :
une partie de montage de substrat (260) fournie sur une portion centrale de celle-ci et ayant une hauteur dans une direction vers le haut sur une portion d'extrémité supérieure à l'extérieur de la partie de pénétration de base conductrice ;
une pluralité d'orifices de fixation cylindriques fournis sur la périphérie de la partie de montage de substrat (260) de sorte que la partie de substrat (700), sur laquelle la partie d'antenne (600) et la partie de circuit sont montées, est configurée pour être montée et fixée aux orifices de fixation par des vis afin d'être attachée solidement ;
un tampon étanche à l'eau (300) ; et
une partie de montage de tampon étanche à l'eau (270), sur laquelle le tampon étanche à l'eau (300) est monté, fournie sur une périphérie externe de la partie de montage de substrat, qui est la portion de bord périphérique, dans laquelle les parties de fixation de crochets principaux (210) et les parties de fixation de boîtier (220) sont formées sur la partie de montage de tampon étanche à l'eau (270).

13. Antenne de véhicule de la revendication 12, dans laquelle le tampon étanche à l'eau (300), qui est un tampon en caoutchouc et est inséré dans une portion périphérique externe de la partie de montage de substrat (260) tout en étant en contact étroit avec la portion périphérique externe, comprend :
une partie de pénétration de substrat formée pour être légèrement supérieure à la taille correspondant à la forme de la partie de montage de substrat (260) de façon à être pénétrée par la partie de substrat (700) ;
une première partie d'extrémité formée pour avoir une aire prédéterminée, sur la périphérie externe de la partie de pénétration de substrat formée dans la portion centrale, de façon à être montée sur la partie de montage de tampon étanche à l'eau (270) de la base en plastique (200) ;
une deuxième partie d'extrémité formée comme une surface de différence de hauteur vers le bas adjacente à la première partie d'extrémité à l'extérieur de la première portion d'extrémité ; et
une partie de couvercle inclinée formée pour être inclinée comme une périphérie la plus externe de la deuxième partie d'extrémité.

14. Antenne de véhicule de la revendication 13, dans laquelle le tampon étanche à l'eau (300) comprend :
une pluralité d'orifices traversants pour crochets principaux qui sont fournis sur une surface supérieure de la première partie d'extrémité, auxquels une portion d'extrémité de surface inférieure de la partie de bord de boîtier du boîtier interne (120) est étroitement attachée, et à travers lesquels les parties de crochets principaux (111) du boîtier externe (110) passent à travers ; et
une pluralité d'orifices traversants insérés dans les parties cylindriques de fixation de boîtier (220) de la base en plastique (200), et la portion d'extrémité de surface inférieure de la partie de bord de boîtier, fournie au boîtier externe (110) qui recouvre la portion externe du boîtier interne (120), entre en contact étroit et est montée sur une surface supérieure la deuxième partie d'extrémité du tampon étanche à l'eau (300).

15. Antenne de véhicule de la revendication 14, dans laquelle la base en plastique (200) et le boîtier interne (120) sont configurés pour être fixés par des vis et couplés solidement dans un état dans lequel : la partie de substrat (700) est montée sur la partie de montage de substrat (260) de la base en plastique (200) ; le tampon étanche à l'eau (300) est monté sur la partie de montage de tampon étanche à l'eau (270) de la base en plastique (200) et entoure une périphérie de la base en plastique (200) ; la portion d'extrémité de surface inférieure de la partie de bord de boîtier du boîtier interne (120) du boîtier d'antenne (100) entre en contact étroit et est montée sur la surface supérieure de la première partie d'extrémité formée sur le tampon étanche à l'eau (300) ; les orifices de fixation fournis dans le boîtier interne (120) sont insérés extérieurement aux portions externes des parties cylindriques de fixation de boîtier (220) de la base en plastique (200) ; et
la partie de bord de boîtier, qui est la portion d'extrémité de surface inférieure, est montée sur la surface supérieure du tampon étanche à l'eau (300) insérée sur la partie de fixation de boîtier, et la portion externe du boîtier interne (120) attachée solidement à la base en plastique (200) est insérée de sorte que :
la portion d'extrémité de surface inférieure de la partie de bord de boîtier du boîtier externe (110) entre en contact étroit et est montée sur la deuxième partie d'extrémité formée sur le tampon étanche à l'eau (300) qui recouvre la périphérie externe de la base en plastique (200) ; la pluralité de parties de crochets principaux (111) fournies dans la surface interne du boîtier externe (110) sont guidées vers le bas le long des parties de guidage de crochets principaux fournies au boîtier interne (120), passent à travers les orifices traversants pour crochets principaux fournis au tampon étanche à l'eau (300), et passent à travers les parties de fixation de crochets principaux (210) fournies à la base en plastique (200)et accrochées et fixées de force ; et
les sous-supports (112) fournis au boîtier externe (110) sont adaptés de force aux parties d'orifices d'insertion de sous-supports fournies dans le boîtier interne (120).

16. Antenne de véhicule de la revendication 15, dans laquelle la base conductrice (400) comprend :
une partie de couplage d'organe de fixation de toit fournie dans une portion inférieure de celle-ci, faisant saillie en forme cylindrique, et ayant une portion filetée sur une surface circonférentielle interne de celle-ci ;
des orifices de fixation fournis, sur une portion de surface plane supérieure de celle-ci, de sorte à être fixés à la base en plastique (200) ; et
des butées pour fixer temporairement la base conductrice à un panneau de toit de véhicule.

17. Antenne de véhicule de la revendication 16, comprenant en outre un organe d'étanchéité en caoutchouc (500), dans laquelle l'organe d'étanchéité en caoutchouc (500) comprend :
une partie de O-ring circulaire qui a une forme circulaire de façon à être attachée pour entourer la portion de bord périphérique de la partie de pénétration de base conductrice de la base en plastique (200), a une périphérie d'un certain diamètre et épaisseur, et entre en contact étroit avec la partie de surface de fond de la base en plastique (200) ; et
une pluralité de parties de couplage en saillie (520) qui sont fournies le long de la circonférence de la partie de O-ring et sont couplées à la base en plastique (200), dans laquelle les parties de couplage en saillie (520) comprennent chacune : une partie d'insertion courbée vers l'extérieur depuis l'intérieur en forme de « C » de façon à être insérée dans la portion de bord périphérique de la partie de pénétration de base conductrice de la base en plastique (200) ; et une pluralité d'orifices de couplage en saillie qui sont insérés dans et couplés à une pluralité de parties de fixation en saillie formées sur la portion de bord périphérique de la partie de pénétration de base conductrice formée sur la surface supérieure de la base en plastique (200).

18. Antenne de véhicule de la revendication 17, dans laquelle la surface supérieure de la base en plastique (200) est renfermée jusqu'au bord périphérique par la première partie d'extrémité, la deuxième partie d'extrémité, et la partie de couvercle inclinée du tampon étanche à l'eau (300), la portion de bord périphérique de la partie de pénétration de base conductrice de la base en plastique (200) est renfermée par l'organe d'étanchéité (500), et alors que la partie de O-ring entre en contact étroit et est couplée à une portion de surface de fond inférieure, la base conductrice (400) qui passe à travers la partie de pénétration de base conductrice formée dans la base en plastique (200) est configurée pour être attachée solidement à la base en plastique (200) à travers les orifices de fixation au moyen d'un organe de couplage.
